# EUROPÄISCHE PATENTSCHRIFT

(11) **EP 3 879 161 B1**
(45) Veröffentlichungstag und Bekanntmachung des Hinweises auf die Patenterteilung: **25.10.2023**
(21) Anmeldenummer: 21160722.1
(22) Anmeldetag: 04.03.2021
(51) Int. Cl.: F16L 39/00, E03B 7/07

(54) **ANSCHLUSSSTÜCK ZUR VERBINDUNG ZWEIER FLUIDLEITUNGSABSCHNITTE**
COUPLING ELEMENT FOR CONNECTING TWO FLUID LINE SECTIONS
PIÈCE DE RACCORD PERMETTANT DE RELIER DEUX SECTIONS DE CONDUITE DE FLUIDE

(30) Priorität: 11.03.2020 AT 502022020
(43) Veröffentlichungstag der Anmeldung: 15.09.2021
(73) Patentinhaber: WCR Technologie GmbH, 42781 Haan (DE)
(72) Erfinder: LEITER, Clemens, 6176 Völs (AT); LEITER, Klaus, 6176 Völs (AT)
(74) Vertreter: Torggler & Hofmann Patentanwälte - Innsbruck

(56) Entgegenhaltungen:
- EP-A1- 2 982 805
- DE-A1-102015 203 854
- FR-A5- 2 117 209

## Beschreibung

Die Erfindung betrifft ein Anschlussstück zur Verbindung zweier Fluidleitungsabschnitte, insbesondere einer Hauswasserinstallation, mit zwei Fluidleitungen wenigstens einer Wasserbehandlungseinrichtung, umfassend
- einen ersten Anschluss für einen ersten Fluidleitungsabschnitt,
- einen zweiten Anschluss für einen zweiten Fluidleitungsabschnitt,
- einen Mehrfachanschluss zum gleichzeitigen Anschluss der zwei Fluidleitungen der Wasserbehandlungseinrichtung.

Weiters betrifft die Erfindung eine Wasserbehandlungseinrichtung zur Verbindung an ein solches Anschlussstück, sowie ein solches Anschlussstück mit einer Wasserbehandlungseinrichtung. Des Weiteren betrifft die Erfindung Verfahren zum Behandeln von einem Fluid, insbesondere Wasser, über zumindest ein solches Anschlussstück.

Ein solches Anschlussstück ist bereits aus der Schrift DE 100 39 496 A1 bekannt, in welcher eine Rohrleitung eines Wassernetzes mit einer Wasserbehandlungseinrichtung verbunden wird, wobei über das Anschlussstück eine Umstellung von einer Betriebsstellung auf eine Umgehungsstellung möglich ist. Eine in zwei Stellungen drehbare Stellscheibe, wobei die Stellscheibe in Segmente unterteilt ist, wird hierbei verwendet, um einen zu der Wasserbehandlungseinrichtung zuführenden Kanal mit einem von der Wasserbehandlungseinrichtung wegführenden Kanal miteinander verbindet. Das Anschlussstück ist in Form eines Flansches zwischen einem weiteren Flansch und einem passenden Gegenflansch angeordnet.

Weitere Anschlussstücke sind bereits aus den Schriften DE 10 2015 203 854 A1, EP 2 982 805 A1 sowie FR 2 117 209 A5 bekannt.

Nachteilig am Stand der Technik ist, dass eine Standzeit der drehbaren Stellscheibe im Vergleich zu den weiteren Bauteilkomponenten des Anschlussstückes und/oder der Wasserbehandlungseinrichtung gering ist, wodurch eine Demontage des Anschlussstückes sowie Wartungsarbeiten mit erhöhter Zeit und erhöhten Kosten verbunden sind. Des Weiteren ist das Anschlussstück auf den zu der Wasserbehandlungseinrichtung zuführenden Kanal und den von der Wasserbehandlungseinrichtung wegführenden Kanal beschränkt, wodurch Einsatzmöglichkeiten des Anschlussstückes limitiert sind. Aus dem Stand der Technik sind des Weiteren Wasserbehandlungseinrichtungen bekannt, welche über ein gattungsgemäßes Anschlussstück mit einer Rohrleitung verbunden sind, wobei eine weitere Rohrleitung von der Wasserbehandlungseinrichtung in ein Wassernetz führt. Nachteilig am Stand der Technik ist, dass die weitere Rohrleitung zur Anbindung an das Wassernetz einen erhöhten Installationsaufwand in einer Montage und/oder Demontage der Wasserbehandlungseinrichtung bedingt. Zudem wird ein Gewicht der Wasserbehandlungseinrichtung erhöht und/oder eine kompakte Wasserbehandlungseinrichtung kann nicht gewährleistet werden, wobei eine erhöhte Fachkenntnis bei einer Montage und/oder Demontage der Wasserbehandlungseinrichtung von Nöten ist. Des Weiteren ist ein sorgsamer Umgang mit der Wasserbehandlungseinrichtung während der Montage und/oder Demontage unabdingbar, wobei dieser insbesondere im Baustellenbetrieb oftmals nicht gewährleistet werden kann.

Die objektiv technische Aufgabe der vorliegenden Erfindung besteht daher darin, ein gegenüber dem Stand der Technik verbessertes Anschlussstück sowie eine Wasserbehandlungseinrichtung anzugeben, bei welchen die Nachteile des Standes der Technik zumindest teilweise behoben sind, und welche sich insbesondere durch eine kompakte konstruktive Ausgestaltung sowie durch eine komfortable respektive benutzerfreundliche Montage und/oder Demontage auszeichnen.

Diese Aufgabe wird durch ein Anschlussstück nach Anspruch 1, eine Wasserbehandlungseinrichtung nach Anspruch 11, eine Einrichtung nach Anspruch 12, sowie die Verfahren nach Anspruch 13 und Anspruch 14 gelöst.

Es ist demnach erfindungsgemäß vorgesehen, dass der Mehrfachanschluss derart ausgebildet ist, dass er beim Anschluss der zwei Fluidleitungen gleichzeitig auch eine dritte Fluidleitung der Wasserbehandlungseinrichtung mit einer Zusatzleitung im Anschlussstück fluiddicht verbindet, wobei der erste Anschluss und der zweite Anschluss an gegenüberliegenden Seiten des Anschlussstückes angeordnet sind.

Dadurch wird erst ermöglicht, dass das Anschlussstück mit einer Wasserbehandlungseinrichtung mechanisch verbindbar ist, wobei die drei Fluidleitungen fluiddicht mit den zwei Fluidleitungsabschnitten und/oder der Zusatzleitung verbunden werden können.

Des Weiteren wird ein wechselweises Münden der drei Fluidleitungen in die zwei Fluidleitungsabschnitte und die Zusatzleitung begünstigt, wobei keine von dem Anschlussstück gesonderte Zusatzleitung - beispielsweise für ein Abführen eines Fluides in einen Abwasserkanal - notwendig ist.

Dadurch können drei Fluidleitungen mit einem mechanischen Verbindungsvorgang fluiddicht zu den zwei Fluidleitungsabschnitten und der Zusatzleitung, insbesondere über ein Ein-Klick-System, verbunden werden.

Unter dem Fachterminus fluiddicht verbunden im Kontext zweier Fluidleitungen ist ein Überströmen eines Fluides von einem ersten Bereich (insbesondere einer ersten Fluidleitung) in einen zweiten Bereich (insbesondere einer zweiten Fluidleitung) zu verstehen, welcher ein Abströmen des Fluides in einen ungewünschten dritten Bereich abseits des zweiten Bereiches (insbesondere außerhalb der zwei Fluidleitungen) unterbindet. Ist das Fluid in flüssiger Form vorliegend, so kann darunter eine hydraulische Verbindung verstanden werden.

Hinzu kommt die positive Eigenschaft, dass im Unterschied zum Stand der Technik zusätzlich zu dem ersten Fluidleitungsabschnitt und dem zweiten Fluidleitungsabschnitt eine zusätzliche Fluidleitung zum Einbringen und/oder Abführen von Fluid aus dem Anschlussstück in die Wasserbehandlungseinrichtung oder umgekehrt gegeben wird. Diese zusätzliche Fluidleitung - gebildet beispielsweise durch die dritte Fluidleitung und die Zusatzleitung - muss nicht wie im Stand der Technik abseits des Anschlussstückes an die Wasserbehandlungseinrichtung angeschlossen werden.

Bei der Zusatzleitung handelt es sich im Allgemeinen ebenfalls um eine Fluidleitung. Die drei Fluidleitungen müssen im Allgemeinen nicht durch ein Rohr ausgebildet sein, sondern können beispielsweise durch konzentrische Räume eines Behälters gebildet werden. Aus Verständlichkeitsgründen werden die drei Fluidleitungen im Folgenden als Leitungen beschrieben, um einen Fließweg eines Fluides besser zu veranschaulichen.

Die drei Fluidleitungen der Wasserbehandlungseinrichtung werden durch eine Verbindung mit den zwei Fluidleitungsabschnitten und/oder der Zusatzleitung verlängert, wobei zur Verdeutlichung der Erfindung die drei Fluidleitungen als separate Gegenstände respektive Bauteilkomponenten erläutert werden.

Wie eingangs ausgeführt, wird Schutz auch begehrt für eine Wasserbehandlungseinrichtung zur Verbindung an ein solches Anschlussstück, wobei die Wasserbehandlungseinrichtung drei Fluidleitungen und einen, vorzugsweise planaren, Anschlussbereich umfasst, wobei der Anschlussbereich drei Öffnungen umfasst, an welchen die drei Fluidleitungen anordenbar oder angeordnet sind.

Durch den Anschlussbereich, welcher beispielsweise an einem Flansch der Wasserbehandlungseinrichtung angeordnet sein kann, wird ein benutzerfreundliches Anbringen der Wasserbehandlungseinrichtung an ein solches Anschlussstück gewährleistet, wobei eine fluiddichte Abdichtung der drei Fluidleitungen generiert werden kann.

Wie eingangs ausgeführt, wird Schutz auch begehrt für ein solches Anschlussstück mit einer Wasserbehandlungseinrichtung, insbesondere einer solchen Wasserbehandlungseinrichtung.

Wie eingangs ausgeführt, wird Schutz auch begehrt für ein Verfahren zum Behandeln von einem Fluid, insbesondere Wasser, über zumindest ein solches Anschlussstück, insbesondere mit einer solchen Wasserbehandlungseinrichtung, wobei
- in einem Normalbetrieb das Fluid von einem ersten Fluidleitungsabschnitt über das Anschlussstück in die Wasserbehandlungseinrichtung in einen zweiten Fluidleitungsabschnitt geleitet wird,
- in einem Spülbetrieb und/oder einem Desinfektions- und/oder Regenerationsbetrieb das über den ersten Fluidleitungsabschnitt zugeführte Fluid, vorzugsweise vollständig, über eine Zusatzleitung durch das Anschlussstück geleitet wird.

Beispielsweise können abhängig von einer Schaltstellung einer Steuervorrichtung die drei Fluidleitungen derart angesteuert werden, dass der Normalbetrieb in den Spülbetrieb übergeht. Aufgrund der drei über das Anschlussstück bedienbaren Fluidleitungen ist eine Vielzahl an unterschiedlichen Schaltstellungen möglich, wobei alle drei Fluidleitungen über das Anschlussstück abgeleitet werden können.

Wie eingangs ausgeführt, wird Schutz auch begehrt für ein Verfahren zum Behandeln von einem Fluid, insbesondere Wasser, über zumindest ein solches Anschlussstück, insbesondere mit einer solchen Wasserbehandlungseinrichtung, wobei
- das Fluid von einem ersten Fluidleitungsabschnitt über das Anschlussstück in die Wasserbehandlungseinrichtung geleitet wird,
- in einem Zudosierbetrieb wenigstens ein Zusatzstoff, insbesondere in Form von Phosphaten, Desinfektionsmittel, Mineralstoffen und/oder Regenerationsmittel, besonders bevorzugt in flüssiger Form, dem Fluid über eine Zusatzleitung zudosiert wird,
- das Fluid mit dem wenigstens einen zudosierten Zusatzstoff über das Anschlussstück in den zweiten Fluidleitungsabschnitt geleitet wird.

Dadurch wird eine effiziente Zudosierung von Zusatzstoffen ermöglicht, wobei sämtliche benötigte Fluidleitungen direkt in und aus dem Anschlussstück weisen.

Hierbei haben sich als Zusatzstoffe, insbesondere Gemische, aus Polyphosphaten (zur Kalkstabilisierung), Orthophosphaten, Silikaten und ph-Stabilisierungsstoffe (zum Korrosionsschutz) als besonders günstig erwiesen.

Vorteilhafte Ausführungsformen der Erfindung sind in den abhängigen Ansprüchen definiert.

Gemäß einer vorteilhaften Ausgestaltung der Erfindung ist vorgesehen, dass die erste Fluidleitung, die zweite Fluidleitung und die dritte Fluidleitung voneinander gesondert ausgebildet sind.

Vorteilhafter Weise ist vorgesehen, dass der erste Anschluss, der zweite Anschluss und der Mehrfachanschluss voneinander gesondert ausgebildet sind.

Erfindungsgemäß ist vorgesehen, dass der erste Anschluss und der zweite Anschluss an gegenüberliegenden Seiten des Anschlussstückes angeordnet sind.

Dadurch wird ein Einbau des Anschlussstückes in ein bestehendes und/oder handelsübliches Rohrleitungssystem komfortabel ermöglicht.

Als vorteilhaft hat sich erwiesen, dass die beiden Anschlüsse parallel zueinander ausgerichtet sind und die wenigstens eine Wasserbehandlungseinrichtung im Wesentlichen normal oder im Wesentlichen parallel zu den beiden Anschlüssen ausgerichtet ist.

Abhängig von der Orientierung der Wasserbehandlungseinrichtung und/oder von räumlichen Gegebenheiten kann ein Komfort in der Montage und/oder Demontage der Wasserbehandlungseinrichtung an dem Anschlussstück erhöht werden und/oder ein platzsparender Einbau der Wasserbehandlungseinrichtung gegenüber dem Anschlussstück bedingt werden.

Eine vorteilhafte Variante besteht darin, dass die Zusatzleitung quer zu dem ersten Anschluss und/oder dem zweiten Anschluss und/oder zwischen dem ersten Anschluss und dem zweiten Anschluss angeordnet ist.

Besonders bevorzugt ist, dass die zwei Fluidleitungsabschnitte in Form einer Hauptzuleitung und einer Hauptableitung ausgebildet sind.

Dadurch wird den in der Praxis üblichen Rohrleitungen Rechnung getragen und das Anschlussstück kann ohne erheblichen Montageaufwand an bestehende Hauptzuleitungen und Hauptableitungen angeschlossen werden.

Bei einem Ausführungsbeispiel der Erfindung ist vorgesehen, dass der Mehrfachanschluss einen, vorzugsweise planaren, Anschlussbereich aufweist, wobei der Anschlussbereich drei Öffnungen umfasst, an welchen die zwei Fluidleitungsabschnitte und die Zusatzleitung und/oder die drei Fluidleitungen angeordnet oder anordenbar sind.

Gemäß einem bevorzugten Ausführungsbeispiel der Erfindung ist vorgesehen, dass die Zusatzleitung, die zwei Fluidleitungsabschnitte und/oder die drei Fluidleitungen über gedachte konzentrische Kreise in die drei Öffnungen des Anschlussbereiches münden, wobei die Zusatzleitung und die zwei Fluidleitungsabschnitte kommunizierend, vorzugsweise fluchtend, in die drei Fluidleitungen münden.

Sind die Öffnungen auf den gedachten konzentrischen Kreisen angeordnet, ist ein Anschlussbereich der Wasserbehandlungseinrichtung konstruktiv einfach korrespondierend an den Anschlussbereich des Anschlussstückes anpassbar.

Als günstig hat sich erwiesen, dass die drei Öffnungen im Wesentlichen konzentrisch angeordnet sind, wobei vorzugsweise vorgesehen ist, dass die drei Öffnungen im Wesentlichen kreisringförmig oder kreisförmig ausgebildet sind.

Dadurch kann eine konstruktive Ausgestaltung eines Verschlussmechanismus, welcher Fluidleitungen über die Öffnungen verbindet, besonders ressourcenschonend hergestellt werden.

Durch kreisringförmige oder kreisförmige Öffnungen sind die Öffnungen rotationssymmetrisch ausgebildet, wodurch ein Anschluss einer Wasserbehandlungseinrichtung an das Anschlussstück besonders begünstigt wird.

Weiters ist bevorzugt vorgesehen, dass wenigstens ein Dichtelement, vorzugsweise in Form eines Dichtringes, an dem Anschlussbereich angeordnet ist.

Durch das wenigstens eine Dichtelement können Fertigungsungenauigkeiten des Anschlussbereiches kompensiert werden, wobei eine fluiddichte Abdichtung gewährleistet werden kann.

Alternativ ist möglich, dass der Mehrfachanschluss als, vorzugsweise kreisförmiger, Flansch ausgebildet ist.

Durch einen Flansch wird ein mehrmaliges Demontieren einer Wasserbehandlungseinrichtung von dem Anschlussstück zerstörungsfrei und benutzerfreundlich ermöglicht, wobei eine definierte Positionierung der Wasserbehandlungseinrichtung gegenüber dem Anschlussstück generiert werden kann.

In einer weiteren Ausführungsform kann das Anschlussstück im Wesentlichen T-förmig ausgebildet ist.

Durch eine T-Form können, insbesondere unterschiedliche, bauliche Größen der Wasserbehandlungseinrichtung und der zwei Fluidleitungsabschnitte besonders platzsparend an dem Anschlussstück angeordnet werden.

Gemäß einer vorteilhaften Ausgestaltung der Erfindung ist vorgesehen, dass die drei Fluidleitungen, die zwei Fluidleitungsabschnitte und/oder die Zusatzleitung bereichsweise, vorzugsweise vollständig, Metalle, vorzugsweise Kupfer, Messing, Kupferlegierungen, Stahl, Blei und/oder Gusseisen, umfassen.

Metalle weisen im Vergleich zu Fluidleitungen aus Kunststoff eine erhöhte Standzeit auf, wodurch ein Wartungsaufwand erheblich reduziert werden kann. Zudem weisen Metalle eine reduzierte Keimbildungstendenz auf, welche insbesondere bei einer Leitung von Trinkwasser von gesundheitlicher Relevanz ist. Für einen Sanitärbereich haben sich hierbei materialspezifische Charakteristika von Rotguss als besonders günstig erwiesen.

Gemäß einer vorteilhaften Ausführungsform der Erfindung ist vorgesehen, dass zumindest eine der drei Fluidleitungen, vorzugsweise die drei Fluidleitungen, von dem Anschlussstück über die Wasserbehandlungseinrichtung zurück in das Anschlussstück führen, wobei vorzugsweise vorgesehen ist, dass die zumindest eine der drei Fluidleitungen vollständig innerhalb der Wasserbehandlungseinrichtung angeordnet ist.

Dadurch wird ermöglicht, dass an die Wasserbehandlungseinrichtung keine gesonderten von den am Anschlussstück verorteten Fluidleitungen anzuschließen sind, um die Funktion der Wasserbehandlungseinrichtung gewährleisten zu können. Zudem wird ein Installationsaufwand bei der Montage der Wasserbehandlungseinrichtung an dem Anschlussstück erheblich reduziert.

Gemäß einer vorteilhaften Ausgestaltung der Erfindung ist vorgesehen, dass der Mehrfachanschluss wenigstens eine Verschlussvorrichtung umfasst, wobei vorzugsweise vorgesehen ist, dass die wenigstens eine Verschlussvorrichtung wenigstens eine Schrägfläche zur fluiddichten Abdichtung der drei Fluidleitungen mit den zwei Fluidleitungsabschnitten und der Zusatzleitung umfasst.

Dadurch wird eine lagesichere und feste Verbindung der Wasserbehandlungseinrichtung mit dem Anschlussstück ermöglicht, wobei eine Leckage von Fluid bei einem Durchtritt zwischen dem Anschlussstück und der Wasserbehandlungseinrichtung unterbunden werden kann.

Besonders bevorzugt ist, dass eine fluiddichte Verbindung durch ein Einrasten der Verschlussvorrichtung, vorzugsweise durch genau eine relative Bewegung der Wasserbehandlungseinrichtung gegenüber dem Anschlussstück, herstellbar ist.

Vorteilhafter Weise ist vorgesehen, dass die wenigstens eine Verschlussvorrichtung in Form eines Bajonettverschlusses, eines Schraubverschlusses, vorzugsweise mit wenigstens einem Gewindebolzen und wenigstens einer Mutter, eines Drehverschlusses und/oder eines Steckverschlusses vorliegt.

Durch einen Bajonettverschluss ist eine relative Stellung der Wasserbehandlungseinrichtung zu dem Anschlussstück besonders präzise herstellbar, wobei durch geringfügige Bewegungen eine definierte Stellung herstellbar ist.

Im Allgemeinen sind auch anderweitige Verdrehsicherungen im Vergleich zu der wenigstens einen Mutter denkbar.

Als günstig hat sich erwiesen, dass in dem Anschlussstück und/oder in der Wasserbehandlungseinrichtung wenigstens eine elektrisch oder mechanisch angetriebene Steuervorrichtung, vorzugsweise in Form eines Mehrfachventiles oder Überströmventils, angeordnet ist, mit welcher eine Verbindung zumindest einer der drei Fluidleitungen
- mit einem der zwei Fluidleitungsabschnitten zu einer davon unterschiedenen Fluidleitung oder Zusatzleitung abänderbar ist, und/oder
- mit einer Zusatzleitung zu einem der zwei Fluidleitungsabschnitten abänderbar ist, und/oder
- absperrbar ist.

Durch die wenigstens eine Steuervorrichtung sind die Fluidleitungen individuell miteinander verbindbar oder absperrbar, wodurch eine Vielzahl an unterschiedlichen Funktionalitäten der Wasserbehandlungseinrichtung über eine Ansteuerung der Verbindungen der Fluidleitungen realisiert werden kann.

Die Verbindung kann im Allgemeinen zwischen zumindest zwei der drei Fluidleitungen und/oder zwischen zumindest einer der drei Fluidleitungen und zumindest einer der beiden Fluidleitungsabschnitten und/oder der Zusatzleitung bestehen.

Beispielsweise kann die wenigstens eine Steuervorrichtung einen Schieber und/oder Kammern umfassen, welche ein Durchströmen von Fluid in eine Fluidleitung unterbindet oder ermöglicht. Beispielsweise kann die wenigstens eine Steuervorrichtung auch abhängig von einem Durchflussdruck eine geänderte Verbindung zwischen den Fluidleitungen herstellen. Wird beispielsweise durch einen erhöhten Wasserverbrauch ein Druckverlust auf ein Maß über 0,5 bar gesteigert, kann ein Überstromventil mechanisch geöffnet werden und eine Verbindung zu einer weiteren Fluidleitung (zum Beispiel dem zweiten Fluidleitungsabschnitt) generieren.

Beispielsweise sind abhängig von einer Stellung einer Feder in einem Überströmventil und/oder abhängig von einer relativen Stellung von Kammern eines Mehrfachventiles Verbindungen der drei Fluidleitungen untereinander und/oder zu den zwei Fluidleitungsanschlüssen sowie der Zusatzleitung änderbar und/oder absperrbar.

Ist die wenigstens eine Steuervorrichtung im Anschlussstück verortet, kann eine besonders kompakte Wasserbehandlungseinrichtung ermöglicht werden. Ist die wenigstens eine Steuervorrichtung in der Wasserbehandlungseinrichtung verortet, können Funktionalitäten in der Wasserbehandlungseinrichtung ohne Adaptierung des Anschlussstückes gewährleistet werden.

Als vorteilhaft hat sich erwiesen, dass in den drei Fluidleitungen, den zwei Fluidleitungsabschnitten und/oder der Zusatzleitung wenigstens eine Messvorrichtung, vorzugsweise in Form einer Druckmessvorrichtung und/oder Durchflussmessvorrichtung, und/oder wenigstens eine Sicherungsvorrichtung, vorzugsweise in Form einer Überdrucksicherung, Temperatursicherung und/oder Konzentrationssicherung, angeordnet ist.

Mit der Messvorrichtung kann ein Zustand des Anschlussstückes und/oder der Wasserbehandlungseinrichtung anhand von Parametern wie Druck, Temperatur und/oder Zusammensetzung des Fluides überwacht werden.

Wenn die drei Fluidleitungen ausgehend von dem Anschlussstück zurück in das Anschlussstück führen, wobei vorzugsweise vorgesehen ist, dass die drei Fluidleitungen vollständig innerhalb der Wasserbehandlungseinrichtung angeordnet sind, wird eine besonders kompakte - insbesondere an einem Anschlussstück angeordnete - Wasserbehandlungseinrichtung ermöglicht.

Eine vorteilhafte Variante besteht darin, dass wenigstens eine in dem Anschlussstück und/oder der Wasserbehandlungseinrichtung verortete Steuervorrichtung das Fluid derart durch eine geänderte Verbindung von drei Fluidleitungen mit den zwei Fluidleitungsabschnitten und/oder der Zusatzleitung umgelenkt wird, dass das Fluid Komponenten der Wasserbehandlungseinrichtung in einem Rückspülbetrieb in entgegengesetzter Richtung durchströmt.

Dadurch kann mit selbigen Komponenten unterschiedliche Funktionalitäten der Wasserbehandlungseinrichtung abhängig von der Verbindung von Fluidleitungen und der damit einhergehenden Strömungsrichtung des Fluides ausgeführt werden.

Besonders bevorzugt ist, dass wenigstens eine in dem Anschlussstück und/oder der Wasserbehandlungseinrichtung verortete Steuervorrichtung wenigstens eine von drei Fluidleitungen absperrt.

Dadurch wird verhindert, dass ein Fluid in nicht benötigte und/oder ungewünschte Fluidleitungen eindringt, wobei beispielsweise ein Druck in den Fluidleitungen beeinträchtigt werden kann und/oder Fluide in Bereiche dringen könnten, für welche die Fluide nicht vorgesehen sind.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: ein Anschlussstück gemäß einem bevorzugten Ausführungsbeispiel mit einer an dem Anschlussstück angeordneten Wasserbehandlungseinrichtung gemäß einem bevorzugten Ausführungsbeispiel in einer schematisch dargestellten Ansicht von vorne,
- Fig. 2: ein Anschlussstück gemäß einem weiteren bevorzugten Ausführungsbeispiel während der Anordnung einer Wasserbehandlungseinrichtung gemäß einem weiteren bevorzugten Ausführungsbeispiel an dem Anschlussstück in einer schematisch dargestellten perspektivischen Ansicht,
- Fig. 3: ein Anschlussstück gemäß einem weiteren bevorzugten Ausführungsbeispiel mit einer an dem Anschlussstück angeordneten Wasserbehandlungseinrichtung gemäß einem weiteren bevorzugten Ausführungsbeispiel, wobei eine Steuervorrichtung in einer ersten Schaltstellung vorliegt, in einer schematisch dargestellten Ansicht von vorne,
- Fig. 4: das Anschlussstück und die Wasserbehandlungseinrichtung gemäß dem Ausführungsbeispiel nach Fig. 3 in einer zweiten Schaltstellung,
- Fig. 5: das Anschlussstück und die Wasserbehandlungseinrichtung gemäß dem Ausführungsbeispiel nach Fig. 3 in einer dritten Schaltstellung,
- Fig. 6: das Anschlussstück und die Wasserbehandlungseinrichtung gemäß dem Ausführungsbeispiel nach Fig. 3 in einer vierten Schaltstellung,
- Fig. 7: ein Anschlussstück gemäß einem weiteren bevorzugten Ausführungsbeispiel mit einer an dem Anschlussstück angeordneten Wasserbehandlungseinrichtung gemäß einem weiteren bevorzugten Ausführungsbeispiel in drei Schnittansichten,
- Fig. 8: ein Anschlussstück gemäß einem weiteren bevorzugten Ausführungsbeispiel mit einer an dem Anschlussstück angeordneten Wasserbehandlungseinrichtung gemäß einem weiteren bevorzugten Ausführungsbeispiel in der ersten Schaltstellung in einer Schnittansicht von oben und einer Schnittansicht von vorne,
- Fig. 9: das Anschlussstück und die Wasserbehandlungseinrichtung gemäß dem Ausführungsbeispiel nach Fig. 8 in der zweiten Schaltstellung in einer Schnittansicht von oben und einer Schnittansicht von vorne,
- Fig. 10: das Anschlussstück und die Wasserbehandlungseinrichtung gemäß dem Ausführungsbeispiel nach Fig. 8 in der dritten Schaltstellung in einer Schnittansicht von oben und einer Schnittansicht von vorne,
- Fig. 11: das Anschlussstück und die Wasserbehandlungseinrichtung gemäß dem Ausführungsbeispiel nach Fig. 8 vor einer Verbindung der Wasserbehandlungseinrichtung mit dem Anschlussstück in einer perspektivischen Ansicht,
- Fig. 12: das Anschlussstück und die Wasserbehandlungseinrichtung gemäß dem Ausführungsbeispiel nach Fig. 8 in einer Verbindung der Wasserbehandlungseinrichtung mit dem Anschlussstück in einer perspektivischen Ansicht,
- Fig. 13: ein Anschlussstück gemäß einem weiteren bevorzugten Ausführungsbeispiel mit einer Wasserbehandlungseinrichtung gemäß einem weiteren bevorzugten Ausführungsbeispiel vor einer Verbindung der Wasserbehandlungseinrichtung mit dem Anschlussstück in einer Schnittdarstellung von der Seite,
- Fig. 14: das Anschlussstück und die Wasserbehandlungseinrichtung gemäß dem Ausführungsbeispiel nach Fig. 13 in einer Verbindung der Wasserbehandlungseinrichtung mit dem Anschlussstück in einer Schnittdarstellung von der Seite.

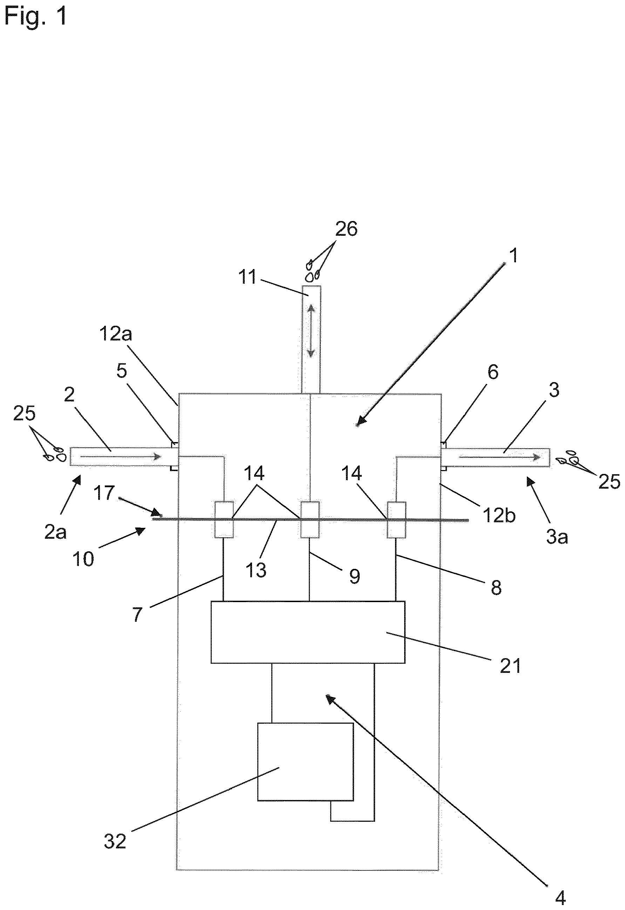

Fig. 1 zeigt ein Anschlussstück 1 zur Verbindung zweier Fluidleitungsabschnitte 2, 3 einer Hauswasserinstallation mit zwei Fluidleitungen 7, 8 einer Wasserbehandlungseinrichtung 4. Das Anschlussstück 1 umfasst einen ersten Anschluss 5 für einen ersten Fluidleitungsabschnitt 2, einen zweiten Anschluss 6 für einen zweiten Fluidleitungsabschnitt 3 sowie einen Mehrfachanschluss 10 zum gleichzeitigen Anschluss der zwei Fluidleitungen 7, 8 der Wasserbehandlungseinrichtung 6.

Der Mehrfachanschluss 10 ist derart ausgebildet, dass er beim Anschluss der zwei Fluidleitungen 7, 8 gleichzeitig auch eine dritte Fluidleitung 9 der Wasserbehandlungseinrichtung 4 mit einer Zusatzleitung 11 im Anschlussstück 1 fluiddicht verbindet.

Ein Fluid 25 in Form von Wasser strömt über den ersten Fluidleitungsabschnitt 2 in das Anschlussstück 1, über den Mehrfachanschluss 10 in die Wasserbehandlungseinrichtung 4.

Der Mehrfachanschluss 10 ist als kreisförmiger Flansch 17 ausgebildet, wobei der Mehrfachanschluss 10 einen planaren Anschlussbereich 13 aufweist. Die Wasserbehandlungseinrichtung 10 weist einen zum Anschlussbereich 13 des Anschlussstückes 1 korrespondierenden Anschlussbereich 13 auf, wobei der Anschlussbereich 13 der Wasserbehandlungseinrichtung 4 als Flansch 17 der Wasserbehandlungseinrichtung 4 ausgebildet ist.

Die erste Fluidleitung 7, die zweite Fluidleitung 8 und die dritte Fluidleitung 9 sind voneinander gesondert ausgebildet. Der erste Anschluss 5, der zweite Anschluss 6 und der Mehrfachanschluss 10 sind voneinander gesondert ausgebildet. Der erste Anschluss 5 und der zweite Anschluss 6 sind an gegenüberliegenden Seiten 12a, 12b des Anschlussstückes 1 angeordnet. Die beiden Anschlüsse 5, 6 sind parallel zueinander ausgerichtet und die Wasserbehandlungseinrichtung 4 ist im Wesentlichen normal auf die beiden Anschlüsse 5, 6 ausgerichtet. Wenn nicht hinreichend viel Platz für die Wasserbehandlungseinrichtung 4 vorhanden ist, kann die Wasserbehandlungseinrichtung 4 auch parallel zu den beiden Anschlüssen 5, 6 angeordnet werden.

Die zwei Fluidleitungsabschnitte 2, 3 sind in Form einer Hauptzuleitung 2a und einer Hauptableitung 3a ausgebildet.

Der Anschlussbereich 13 umfasst drei Öffnungen 14, an welchen die zwei Fluidleitungsabschnitte 2, 3, die Zusatzleitung 11 und die drei Fluidleitungen 7, 8, 9 angeordnet sind.

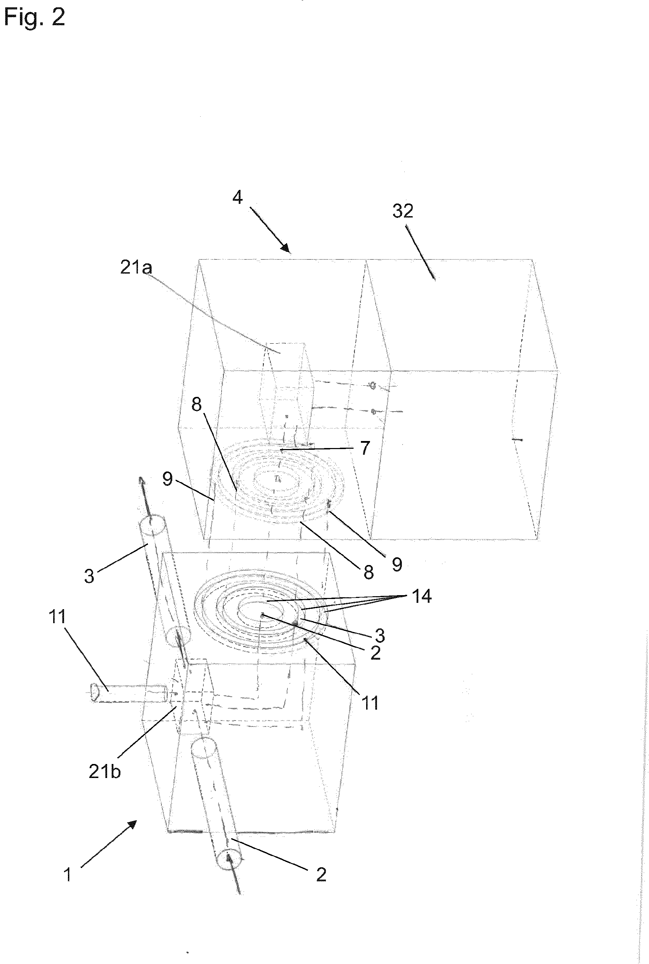

Fig. 2 zeigt ein Anschlussstück 1, wobei die Zusatzleitung 11, die zwei Fluidleitungsabschnitte 2, 3 und die drei Fluidleitungen 7, 8, 9 über gedachte konzentrische Kreise in die drei Öffnungen 14 des Anschlussbereiches 13 münden. Die Zusatzleitung 11 und die zwei Fluidleitungsabschnitte 2, 3 münden kommunizierend und fluchtend in die drei Fluidleitungen 7, 8, 9.

In dem Anschlussstück 1 ist eine mechanisch angetriebene Steuervorrichtung 21 in Form eines Überströmventils 21b angeordnet, mit welcher eine Verbindung 22 zumindest einer der drei Fluidleitungen 7, 8, 9
- mit einem der zwei Fluidleitungsabschnitten 2, 3 zu einer davon unterschiedenen Fluidleitung 3, 2 oder Zusatzleitung 11 abänderbar ist,
- mit einer Zusatzleitung 11 zu einem der zwei Fluidleitungsabschnitten 2, 3 abänderbar ist, und/oder
- absperrbar ist.

In der Wasserbehandlungseinrichtung 4 ist eine mechanisch angetriebene Steuervorrichtung 21 in Form eines Mehrfachventiles 21a angeordnet, mit welcher eine Verbindung 22 zumindest einer der drei Fluidleitungen 7, 8, 9
- mit einem der zwei Fluidleitungsabschnitten 2, 3 zu einer davon unterschiedenen Fluidleitung 3, 2 oder Zusatzleitung 11 abänderbar ist,
- mit einer Zusatzleitung 11 zu einem der zwei Fluidleitungsabschnitten 2, 3 abänderbar ist, und/oder
- absperrbar ist.

Über die Verbindung 22 wird ein Fluidfluss von dem Anschlussstück 1 in die Wasserbehandlungseinrichtung 4 und umgekehrt abhängig von einer Schaltstellung der zwei Steuervorrichtungen 21 ermöglicht, modifiziert oder gesperrt.

Im Allgemeinen können die beiden Steuervorrichtungen 21 auch elektrisch angetrieben sein.

Eine Komponente 32 der Wasserbehandlungseinrichtung 4 umfasst ein Filterelement, eine Kalkschutzkartusche und eine Adsorberkartusche. Im Allgemeinen kann die Komponente 32 auch lediglich ein Filterelement, eine Kalkschutzkartusche, eine Adsoberkartusche oder eine Kombination aus diesen umfassen. Durch die Komponente 32 ist auch eine katalytische Aufbereitung des Fluides möglich.

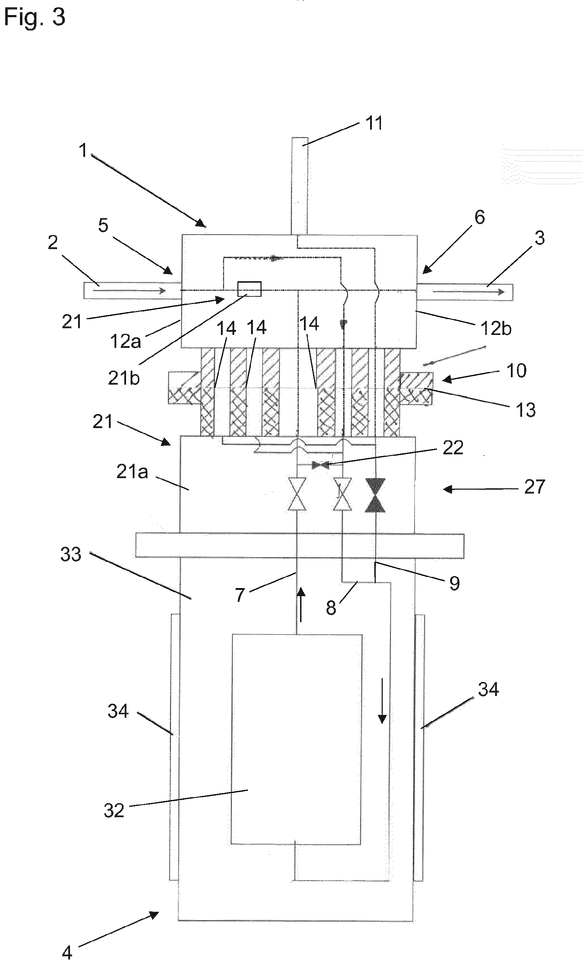

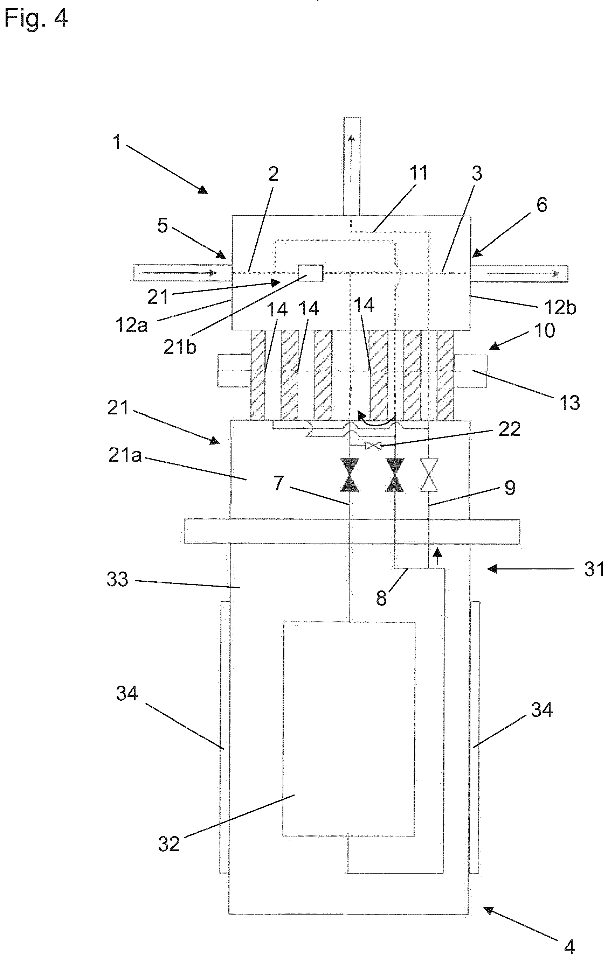

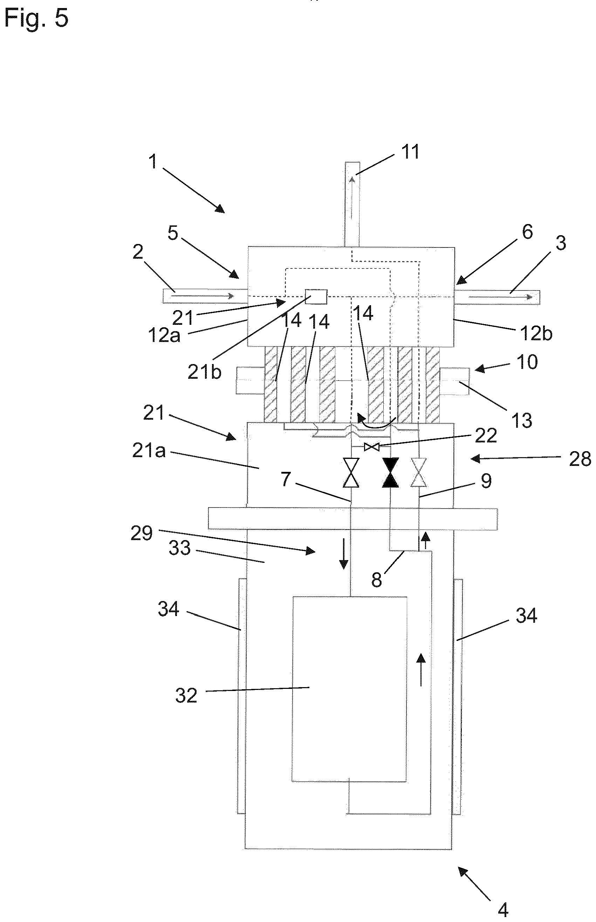

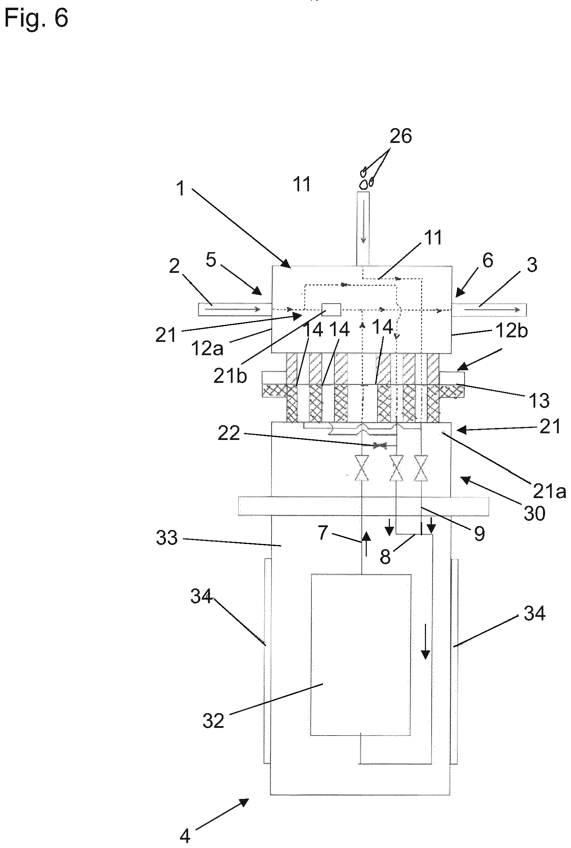

Durch ein Zusammenwirken der Steuervorrichtungen 21 mit der Komponente 32 ist eine Wasserbehandlung (siehe Fig. 3), eine thermische Desinfektion (siehe Fig. 4), eine Spülung und/oder Rückspülung (siehe Fig. 5) sowie eine Zudosierung von Zusatzstoffen 26 (siehe Fig. 6) generierbar. Genützt werden hierbei zumindest zwei der drei Fluidleitungen 7, 8, 9.

Die erste Fluidleitung 7 leitet das Fluid 25 zentral aus der Wasserbehandlungseinrichtung 4 und ist zylindrisch ausgebildet, wobei im Anschlussbereich 13 eine kreisförmige Öffnung 14 angeordnet ist, an welcher die erste Fluidleitung 7 angeordnet ist. Die beiden weiteren Öffnungen 14, welche die zweite Fluidleitung 8 sowie die dritte Fluidleitung 9 mit dem ersten Fluidleitungsabschnitt 2 und der Zusatzleitung 11 verbinden, sind kreisringförmig ausgebildet. Die Fluidleitungen 7, 8, 9 münden über gedachte konzentrische Kreise in das Anschlussstück 1.

Im Allgemeinen sind jedoch auch kreisringsegmentförmige Öffnungen 14 oder Öffnungen 14, welche an gedachten konzentrischen Kreisen angeordnet sind, möglich.

Fig. 3 zeigt ein Anschlussstück 1 mit einer Wasserbehandlungseinrichtung 4, wobei eine Wasserbehandlung in einem Normalbetrieb 27 vollzogen wird.

Das zu behandelnde Wasser strömt über den ersten Fluidleitungsabschnitt 2 in das Anschlussstück 1 und weiter in die zweite Fluidleitung 8 der Wasserbehandlungseinrichtung 4.

Eine Steuervorrichtung 21 der Wasserbehandlungseinrichtung 4 in Form eines Mehrfachventiles 21a leitet das Fluid 25 in Form von Wasser der zweiten Fluidleitung in die Komponente 32 der Wasserbehandlungseinrichtung 4. Das Fluid 25 wird von der Komponente 32 über die erste Fluidleitung 7 zurück über den Anschlussbereich 13 in das Anschlussstück 1 geleitet, wobei eine Ableitung über den zweiten Fluidleitungsabschnitt 3 erfolgt.

Die Steuervorrichtung 21 in Form eines Mehrfachventiles 21 a der Wasserbehandlungseinrichtung 4 erwirkt ein Absperren der dritten Fluidleitung 9. Eine Verbindung 22 zwischen der ersten Fluidleitung 7 und der zweiten Fluidleitung 8 wird durch die Steuervorrichtung 21 abgesperrt, wodurch kein Fluid 25 über die Verbindung 22 strömen kann. Es handelt sich um den Normalbetrieb 27.

Die Steuervorrichtung 21 in Form eines Überströmventiles 21b ist im Anschlussstück 1 verortet.

Die drei Fluidleitungen 7, 8, 9 führen von dem Anschlussstück 1 über die Wasserbehandlungseinrichtung 4 zurück in das Anschlussstück 1, wobei die drei Fluidleitungen 7, 8, 9 vollständig innerhalb der Wasserbehandlungseinrichtung 4 angeordnet sind.

Eine Schaltstellung der Steuervorrichtung 21 der Wasserbehandlungseinrichtung weist eine geschlossene Verbindung 22 sowie eine abgesperrte dritte Fluidleitung 9 auf, wobei die erste Fluidleitung 7 und die zweite Fluidleitung 8 offen sind. Im Allgemeinen können weitere Verbindungen 22 zwischen den Fluidleitungen 7, 8, 9 vorhanden sein.

Wenn aufgrund einer hohen Fluidanforderung und ein damit verbundener hoher Fluidstrom auftritt, ist ein Teilstrom des Fluides 25 über den zweiten Fluidleitungsabschnitt 3 direkt abführbar, wobei die im Anschluss 1 befindliche Steuereinheit 21 eine Strömung zum zweiten Fluidleitungsabschnitt 3 sowie der Wasserbehandlungseinrichtung 4 ermöglicht. Dieser Vorgang ist im Allgemeinen in jedem Betriebsmodus der Wasserbehandlungseinrichtung 4 erwirkbar.

Fig. 4 zeigt ein Anschlussstück 1 mit einer Wasserbehandlungseinrichtung 4, wobei eine Desinfektion und/oder eine Regeneration in einem Desinfektions- und/oder Regenerationsbetrieb 31 der Wasserbehandlungseinrichtung 4 erfolgt.

Das Fluid 25 wird über den ersten Fluidleitungsabschnitt 2 in die zweite Fluidleitung 8 der Wasserbehandlungseinrichtung 4 geleitet, wobei die Steuervorrichtung 21 der Wasserbehandlungseinrichtung 4 - als Mehrfachventil 21 a ausgebildet - das Fluid 25 über die Verbindung 22 direkt zurück in das Anschlussstück 1 leitet. Das Fluid 25 wird hierbei nicht behandelt. Anschließend wird das Fluid 25 über den zweiten Fluidleitungsabschnitt 3 abgeleitet.

Im Desinfektions- und/oder Regenerationsbetrieb 31 befindet sich das über den ersten Fluidleitungsabschnitt 2 zugeführte Fluid in einem Behälter 33, wobei während dem Desinfektions- und/oder Regenerationsbetrieb 31 kein weiteres Fluid dem Behälter 33 zugeführt wird.

Der Behälter 33 der Wasserbehandlungseinrichtung 4 wird über eine Heizmanschette 34 aufgeheizt, um eine thermische Desinfektion der Komponente 32 zu erwirken. Besonders bevorzugt hat sich hierbei eine Temperatur von 70°C bis 90°C erwiesen.

Ein im Behälter 33 und in der Komponente 32 befindliches Expansionswasser kann über die dritte Fluidleitung 9 aus der Wasserbehandlungseinrichtung 4 in das Anschlussstück 1 und weiter über die Zusatzleitung 11 abgeführt werden. Dadurch wird ein Druckaufbau im Behälter 33 und der Komponente 32 reduziert oder verhindert.

Durch die Steuereinheit 21b der Wasserbehandlungseinrichtung 4 ist die Verbindung 22 sowie die dritte Fluidleitung 9 offen, wobei die erste Fluidleitung 7 und die zweite Fluidleitung 8 abgesperrt sind. Im Allgemeinen ist auch eine Desinfektion und Regeneration des Fluides 25 über eine derartige Schaltstellung der Steuereinheit 21 in Form eines Mehrfachventiles 21a oder eines Überströmventiles 21b im Anschlussstück 1 möglich.

Die Schaltstellung ist im Allgemeinen auch durch eine in dem Anschlussstück 1 verortete Steuereinheit 21 erwirkbar.

Fig. 5 zeigt ein Anschlussstück 1 mit einer Wasserbehandlungseinrichtung 4, wobei eine Reinigung und Spülung einer Wasserbehandlungseinrichtung 4 in einem Spülbetrieb 28 mit einem Fluid 25 vollzogen wird. Das Fluid 25 wird in diesem Ausführungsbeispiel im Spülbetrieb 28 teilweise über die Zusatzleitung 11 geleitet.

Um ein Ausspülen von heißem Wasser aus der Wasserbehandlungseinrichtung 4 (beispielsweise nach einer thermischen Desinfektion oder Reinigung nach Fig. 4) zu generieren, ohne dass dabei das heiße Wasser aus der Wasserbehandlungseinrichtung 4 in die Wasserinstallation - zum Beispiel in eine Trinkwasserrohrleitung - gelangt, erfolgt über die gezeigte Schaltstellung der Steuereinheit 21 der Wasserbehandlungseinrichtung 4 eine Ableitung des heißen Wassers - zum Beispiel nach einer Behandlung des Wassers nach Fig. 4 - in einen Abfluss über die Zusatzleitung 11.

Das zu behandelnde Fluid 25 wird über den ersten Fluidleitungsabschnitt 2 in die zweite Fluidleitung 8 und über die erste Fluidleitung 7 in den zweiten Fluidleitungsabschnitt 3 geleitet, wobei das Fluid 25 in Form von Wasser nicht behandelt wird. Hierzu ist die Verbindung 22 geöffnet.

Die Steuereinheit 21 in Form eines Mehrfachventiles 21a der Wasserbehandlungseinrichtung 4 leitet einen Teilstrom des in die Wasserbehandlungseinrichtung 4 hereinströmenden Fluides 25 über die Verbindung 22 in Richtung der Komponente 32, wobei ein Teilstrom des Fluides 25 zurück in das Anschlussstück 1 in Richtung des zweiten Fluidleitungsanschlusses 3 und ein weiterer Teilstrom des Fluides 25 über die erste Fluidleitung 7 in den Behälter 33 geleitet wird.. Nach einem Passieren der Komponente 32 wird das Fluid 25 über die dritte Fluidleitung 9 in die Zusatzleitung 11 geleitet und fließt von der Zusatzleitung 11 beispielsweise in Richtung eines Abflusses ab.

Die Komponente 32 wird in dieser Ausführungsform der Erfindung in einer Gegenrichtung durchströmt, wobei der Spülbetrieb 28 gleichzeitig in einem Rückspülbetrieb 29 durchgeführt wird. Im Allgemeinen kann der Spülbetrieb 28 auch ohne den Rückspülbetrieb 29 mit einer dem Rückspülbetrieb 29 entgegengesetzten Flussrichtung des Fluides 25 verwendet werden.

Durch diese Strömungsleitung des Fluides 25 wird die Wasserbehandlungseinrichtung 4 gespült und/oder abgekühlt.

Die Schaltstellung umfasst eine offene Verbindung 22, wobei die erste Fluidleitung 7 offen sowie die dritte Fluidleitung 9 offen sind und die zweite Fluidleitung 8 geschlossen ist. Diese Schaltstellung ist eine Variante eines Rückspülbetriebes 29 und eines Spülbetriebes 28.

Eine in dem Anschlussstück 1 und eine in der Wasserbehandlungseinrichtung 4 verortete Steuervorrichtung 21 leiten das Fluid 25 derart durch eine geänderte Verbindung 22 von den drei Fluidleitungen 7, 8, 9 mit den zwei Fluidleitungsabschnitten 2, 3 und der Zusatzleitung 11 um, dass das Fluid 25 Komponenten 32 der Wasserbehandlungseinrichtung 4 ausgehend von einem Spülbetrieb 28 in einem Rückspülbetrieb 29 in entgegengesetzter Richtung durchströmt.

Gezeigt ist ein Verfahren zum Behandeln des Fluid 25 in Form von Wasser über ein Anschlussstück 1 mit einer Wasserbehandlungseinrichtung 4, wobei in einem Spülbetrieb 28 das Fluid 25 von einem ersten Fluidleitungsabschnitt 2 über das Anschlussstück 1 in die Wasserbehandlungseinrichtung 4 in die Zusatzleitung 11 geleitet wird. Ein Teilstrom des durch den ersten Fluidleitungsabschnitt 2 strömenden Fluides 25 wird dabei direkt an den zweiten Fluidleitungsabschnitt 3 weitergeleitet. In dem Spülbetrieb 28 kann im Allgemeinen das über den ersten Fluidleitungsabschnitt 2 zugeführte Fluid 25 vollständig oder teilweise über die Zusatzleitung 11 durch das Anschlussstück 1 geleitet werden.

Fig. 6 zeigt ein Anschlussstück 1 mit einer Wasserbehandlungseinrichtung 4, wobei ein Fluid 25 durch Zudosieren von Zusatzstoffen 26 in einem Zudosierbetrieb 30 behandelt wird.

Das Fluid 25 strömt über den ersten Fluidleitungsabschnitt 2 in die zweite Fluidleitung 8 der Wasserbehandlungseinrichtung 4, wobei das Fluid 25 über die erste Fluidleitung 7 in den zweiten Fluidleitungsabschnitt 3 des Anschlussstückes 1 abgeleitet wird.

Über die Zusatzleitung 11 werden Zusatzstoffe 26 durch die Steuereinheit 21 in die dritte Fluidleitung 9 geleitet. Die Zusatzstoffe 26 werden dem Fluid 25 in Form von Wasser im Behälter 33 zudosiert und vermischen sich in der Wasserbehandlungseinrichtung 4 mit dem zu behandelnden Fluid 25, wobei das Fluid 25 mit den Zusatzstoffen 26 in die Komponente 32 weitergeleitet wird. Besonders bevorzugt haben sich Zusatzstoffe 26 in Form von Desinfektionsmittel und Mineralstofflösungen in flüssiger Form erwiesen.

Die Anzahl und Verbindungen 22 der Fluidleitungen sind im Allgemeinen beliebig und sind nicht beschränkend auszulegen.

Die Schaltstellung der Steuereinheit 21 der Wasserbehandlungseinrichtung 4 weist eine geschlossene Verbindung 22 auf, wobei die drei Fluidleitungen 7, 8, 9 offen für einen Durchfluss des Fluides 25 sind.

In einem Zudosierbetrieb 30 werden Zusatzstoffe 26 in Form von Phosphaten, Desinfektionsmittel, Mineralstoffen und Regenerationsmittel in flüssiger Form dem Fluid 25 über eine Zusatzleitung 11 zudosiert. Anschließend wird das Fluid 25 mit den zudosierten Zusatzstoffen 26 über das Anschlussstück 1 in den zweiten Fluidleitungsabschnitt 3 geleitet.

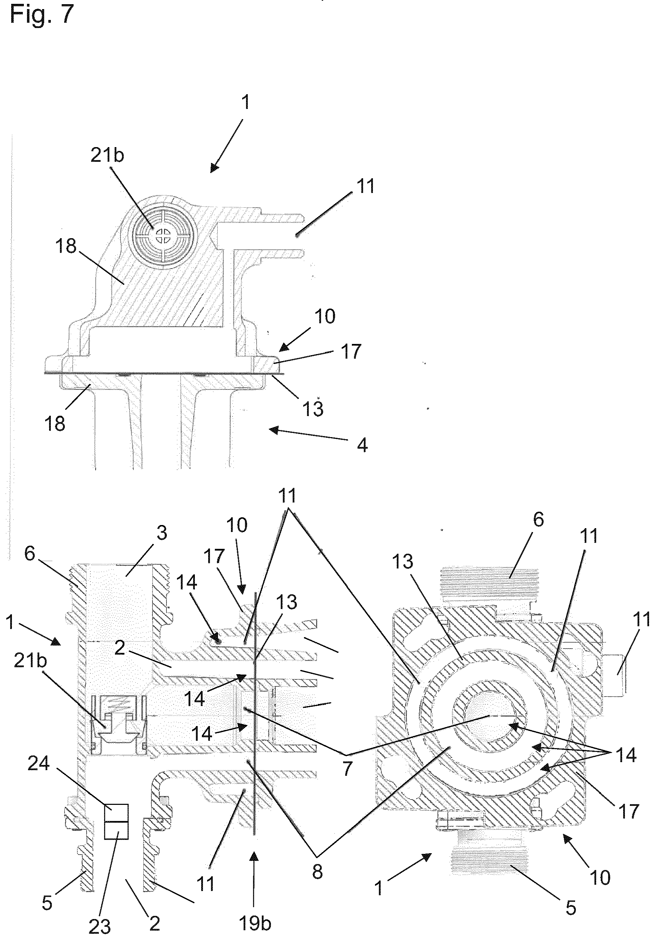

Fig. 7 zeigt ein Anschlussstück 1 welches aus Metall 18 in Form von Rotguss ausgebildet ist. Der Mehrfachanschluss 10 ist als Flansch 17 ausgebildet und weist einen rechteckigen und planaren Anschlussbereich 13 auf. Der Anschlussbereich 13 kann im Allgemeinen jedoch auch rund ausgebildet sein.

Der Anschlussbereich 13 weist Aussparungen für eine Verschlussvorrichtung 19 auf. Die Verschlussvorrichtung 19 ist in Form eines Schraubverschlusses 19b ausgebildet. Über den Schraubverschluss 19b ist das Anschlussstück 1 mit der Wasserbehandlungseinrichtung 4 durch Gewindebolzen mit Muttern (aus Übersichtlichkeitsgründen nicht dargestellt) verbunden. Unter Gewindebolzen sind auch Führungsstifte mit einem Gewinde oder Schrauben zu verstehen.

Besonders bevorzugt haben sich Gewindebolzen erwiesen, welche an der Wasserbehandlungseinrichtung 4 befestigt sind und über Muttern an dem Anschlussstück 1 befestigt werden.

Im Anschlussstück 1 ist eine Steuereinheit 21 in Form eines Überströmventiles 21b angeordnet, welches bei einem hinreichend hohen Durchflussdruck des Fluides 21 - bedingt durch einen hinreichend großen Differenzdruck am Überströmventil 21b - eine Verbindung 22 zwischen dem ersten Fluidleitungsabschnitt 2 und dem zweiten Fluidleitungsabschnitt 3 über eine Federvorrichtung der Steuereinheit 21 generiert, wobei zumindest ein Teilstrom des Fluides 25 direkt zu dem zweiten Fluidleitungsabschnitt 3 strömen kann.

Ist kein hinreichend großer Durchflussdruck des Fluides 25 vorhanden, so wird das Fluid 25 ohne eine direkte Verbindung 22 zu dem zweiten Fluidleitungsabschnitt 3 von dem ersten Fluidleitungsabschnitt 2 in die zweite Fluidleitung 8 geleitet.

In dem ersten Fluidleitungsabschnitt 2 ist eine Messvorrichtung 23 in Form einer Druckmessvorrichtung und Durchflussmessvorrichtung sowie eine Sicherungsvorrichtung 24 in Form einer Überdrucksicherung, Temperatursicherung und Konzentrationssicherung angeordnet. Im Allgemeinen kann auch in zumindest einer der drei Fluidleitungen 7, 8, 9, der Zusatzleitung 11 und/oder dem zweiten Fluidleitungsabschnitt 3 eine Messvorrichtung 23 und/oder eine Sicherungsvorrichtung 24 angeordnet sein.

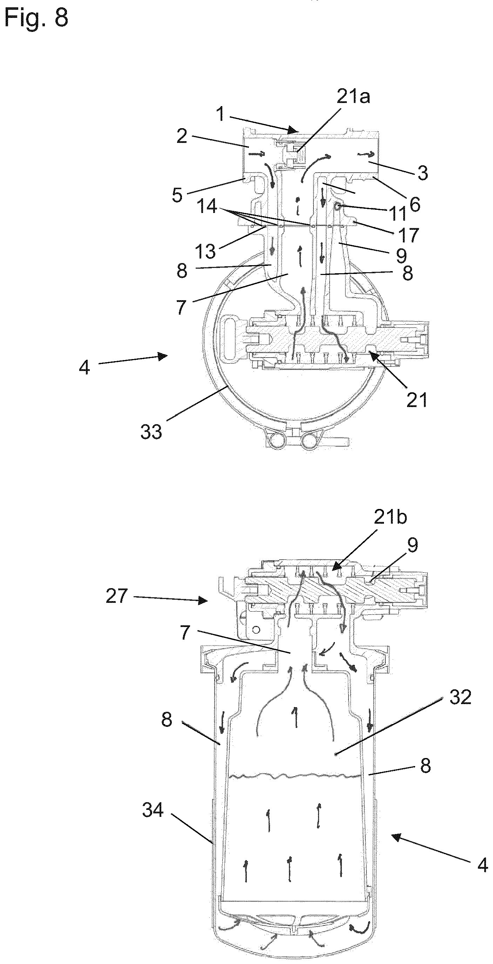

Fig. 8 zeigt die Behandlung von Wasser gemäß Fig. 3 in einem weiteren Ausführungsbeispiel des Anschlussstückes1 in zwei Schnittansichten.

Die Wasserbehandlungseinrichtung 4 ist mit einem Anschlussstück 1 verbunden. Die Wasserbehandlungseinrichtung 4 umfasst drei Fluidleitungen 7, 8, 9 und einen planaren Anschlussbereich 13, wobei der Anschlussbereich 13 drei Öffnungen 14 umfasst, an welchen die drei Fluidleitungen 7, 8, 9 angeordnet sind.

Die drei Fluidleitungen 7, 8, 9 führen ausgehend von dem Anschlussstück 1 zurück in das Anschlussstück 1, wobei die drei Fluidleitungen 7, 8, 9 vollständig innerhalb der Wasserbehandlungseinrichtung 4 angeordnet sind. Die dritte Fluidleitung 9 ist durch die Steuervorrichtung 21 gesperrt.

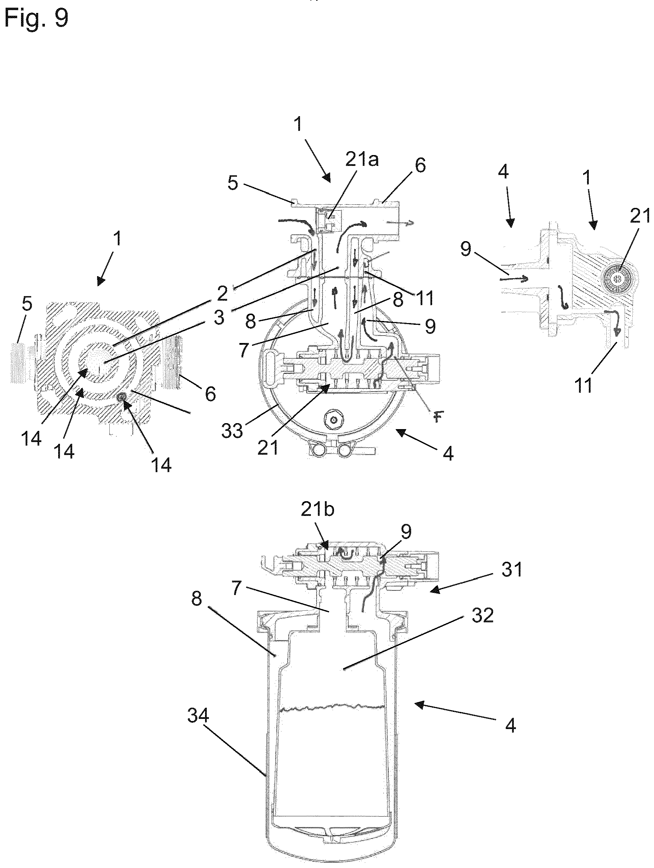

Fig. 9 zeigt die Behandlung der Wasserbehandlungseinrichtung 4 gemäß Fig. 4 in einem weiteren Ausführungsbeispiel des Anschlussstückes 1 in vier Schnittansichten.

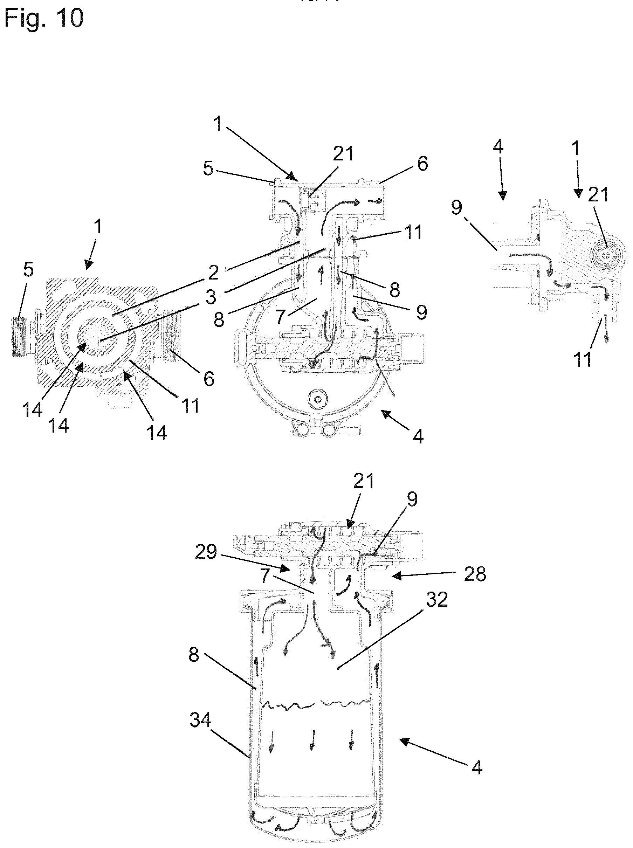

Fig. 10 zeigt die Reinigung der Wasserbehandlungseinrichtung 4 gemäß Fig. 5 mit Fluid 25 in einem weiteren Ausführungsbeispiel des Anschlussstückes 1 in vier Schnittdarstellungen.

Gezeigt ist ein Verfahren zum Behandeln des Fluides 25 in Form von Wasser über das Anschlussstück 1 mit einer Wasserbehandlungseinrichtung 4 nach Anspruch 20 oder 21, wobei das Fluid 25 von dem ersten Fluidleitungsabschnitt 2 über das Anschlussstück 1 in die Wasserbehandlungseinrichtung 4 geleitet wird.

Über eine in dem Anschlussstück 1 und eine in der Wasserbehandlungseinrichtung 4 verortete Steuervorrichtung 21 sind die drei Fluidleitungen 7, 8, 9 individuell absperrbar.

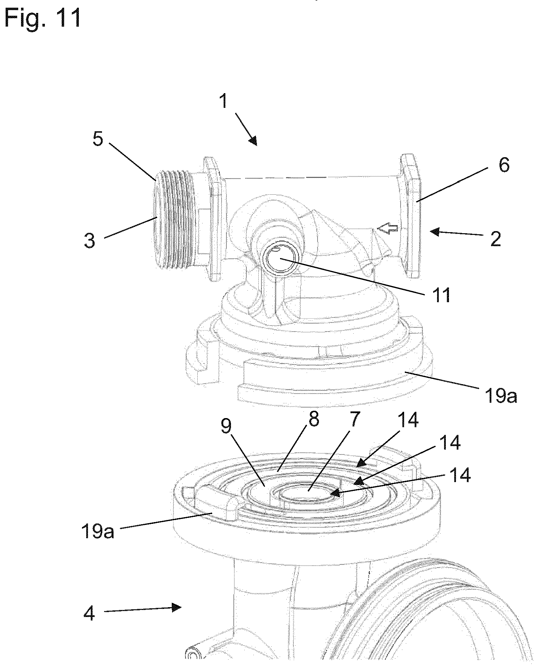

Fig. 11 zeigt ein Anschlussstück 1 mit einem Mehrfachanschluss 10, wobei der Mehrfachanschluss 10 einen Bajonettverschluss 19a zur fluiddichten Abdichtung der drei Fluidleitungen 7, 8, 9 mit den zwei Fluidleitungsabschnitten 2, 3 und der Zusatzleitung 11 über einen weiteren Anschluss aufweist. Im Allgemeinen kann der Bajonettverschluss 19a eine Schrägfläche umfassen, welche eine Abdichtung besonders begünstigt.

Die Zusatzleitung 11 ist quer zu den beiden Anschlüssen 5, 6 und zwischen dem ersten Anschluss 5 und dem zweiten Anschluss 6 angeordnet.

Die drei Öffnungen 14 sind konzentrisch angeordnet, wobei zwei der drei Öffnungen 14 kreisringförmig und die dritte Öffnung 14 kreisförmig ist.

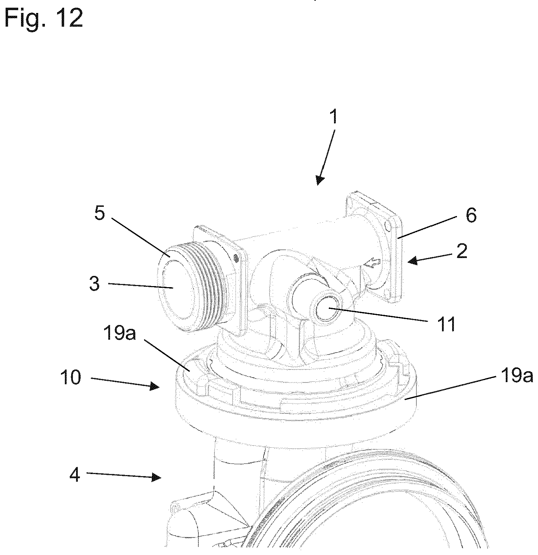

Fig. 12 unterscheidet sich von Fig. 11 nur dahingehend, dass der Mehrfachanschluss 10 an der Wasserbehandlungseinrichtung 4 angeordnet und dadurch fluiddicht verbunden ist.

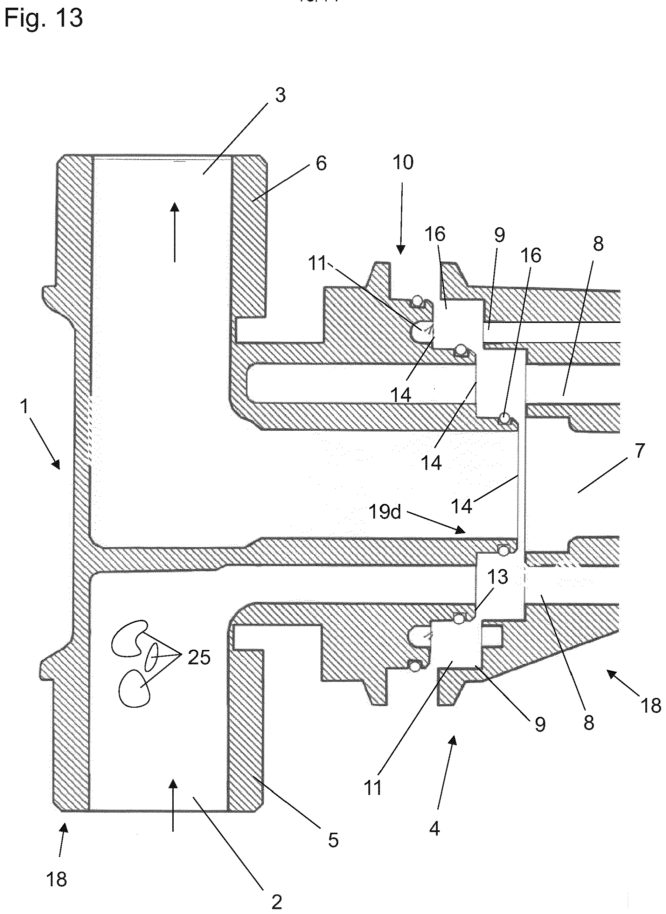

Fig. 13 zeigt ein T-förmig ausgebildetes Anschlussstück 1 mit einem stufig ausgebildeten Anschlussbereich 13. Die Verschlussvorrichtung 19 liegt in Form eines Steckverschlusses 19d vor.

Im Allgemeinen kann die Verschlussvorrichtung 19 auch in Form eines Drehverschlusses 19c (in der Darstellung nicht ersichtlich) vorliegen, wobei analog zu einem Gewinde eine fluiddichte Abdichtung durch eine Rotation um eine Achse erwirkt werden kann.

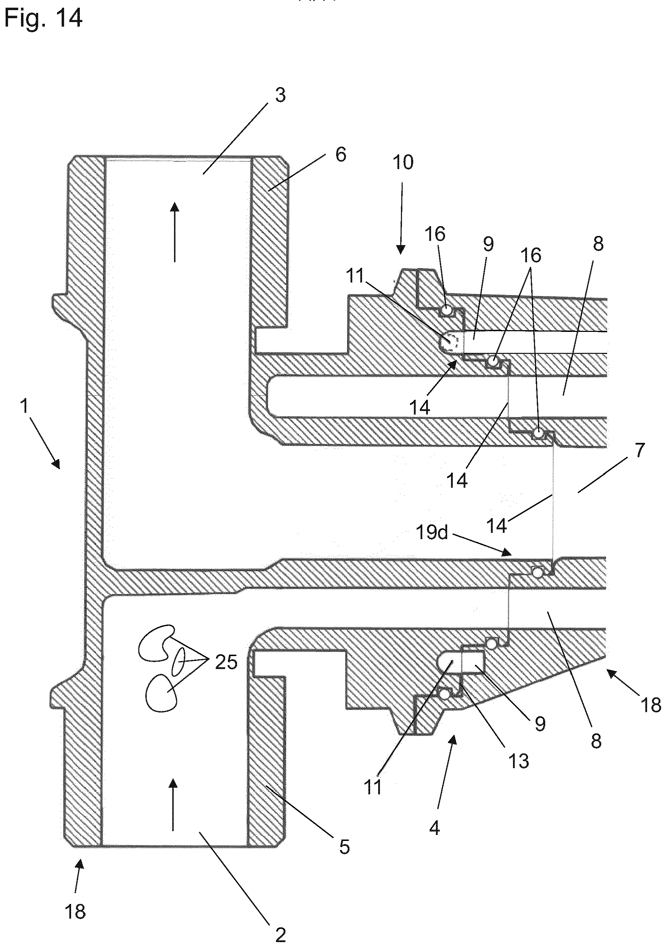

Fig. 14 unterscheidet sich von Fig. 13 nur dahingehend, dass die Wasserbehandlungseinrichtung 4 über den Steckverschluss 19 an dem Anschlusstück 1 angebracht und dadurch fluiddicht verbunden ist.

Der Anschlussbereich 13 umfasst vier gestufte planare Bereiche, wobei der Anschlussbereich 13 an sich in diesem Ausführungsbeispiel als nicht planar anzusehen ist.

Drei Dichtelemente 16 in Form von Dichtringen sind an Seitenflächen des Mehrfachanschlusses 10 angeordnet. Im Allgemeinen können die Dichtelemente 16 jedoch auch an dem Anschlussbereich 13 angeordnet sein. Die Anzahl der Dichtelemente 16 ist im Allgemeinen beliebig; besonders bevorzugt sind drei Dichtelemente 16 für jeweils eine der drei Fluidleitungen 7, 8, 9.

Die drei Fluidleitungen 7, 8, 9, die zwei Fluidleitungsabschnitte 2, 3 und die Zusatzleitung 11 sind vollständig aus Metallen 18 gebildet.

### Bezugszeichenliste:

- 1: Anschlussstück
- 2: erster Fluidleitungsabschnitt
- 2a: Hauptzuleitung
- 3: zweiter Fluidleitungsabschnitt
- 3a: Hauptableitung
- 4: Wasserbehandlungseinrichtung
- 5: erster Anschluss
- 6: zweiter Anschluss
- 7: erste Fluidleitung
- 8: zweite Fluidleitung
- 9: dritte Fluidleitung
- 10: Mehrfachanschluss
- 11: Zusatzleitung
- 12a, 12b: gegenüberliegende Seiten
- 13: Anschlussbereich
- 14: Öffnungen
- 16: Dichtelement
- 17: Flansch
- 18: Metall
- 19: Verschlussvorrichtung
- 19a: Bajonettverschluss
- 19b: Schraubverschluss
- 19c: Drehverschluss
- 19d: Steckverschluss
- 21: Steuervorrichtung
- 21a: Mehrfachventil
- 21b: Überströmventil
- 22: Verbindung
- 23: Messvorrichtung
- 24: Sicherungsvorrichtung
- 25: Fluid
- 26: Zusatzstoffe
- 27: Normalbetrieb
- 28: Spülbetrieb
- 29: Rückspülbetrieb
- 30: Zudosierbetrieb
- 31: Desinfektions- und/oder Reinigungsbetrieb
- 32: Komponenten
- 33: Behälter
- 34: Heizmanschette

## Patentansprüche

1. Anschlussstück (1) zur Verbindung zweier Fluidleitungsabschnitte (2, 3), insbesondere einer Hauswasserinstallation, mit zwei Fluidleitungen (7, 8) wenigstens einer Wasserbehandlungseinrichtung (4), umfassend
- einen ersten Anschluss (5) für einen ersten Fluidleitungsabschnitt (2),
- einen zweiten Anschluss (6) für einen zweiten Fluidleitungsabschnitt (3),
- einen Mehrfachanschluss (10) zum gleichzeitigen Anschluss der zwei Fluidleitungen (7, 8) der Wasserbehandlungseinrichtung (6),
wobei der erste Anschluss (5) und der zweite Anschluss (6) an gegenüberliegenden Seiten (12a, 12b) des Anschlussstückes (1) angeordnet sind,
**dadurch gekennzeichnet, dass** der Mehrfachanschluss (10) derart ausgebildet ist, dass er beim Anschluss der zwei Fluidleitungen (7, 8) gleichzeitig auch eine dritte Fluidleitung (9) der Wasserbehandlungseinrichtung (4) mit einer Zusatzleitung (11) im Anschlussstück (1) fluiddicht verbinden kann.

2. Anschlussstück (1) nach Anspruch 1, wobei
- die erste Fluidleitung (7), die zweite Fluidleitung (8) und die dritte Fluidleitung (9) voneinander gesondert ausgebildet sind,
- der erste Anschluss (5), der zweite Anschluss (6) und der Mehrfachanschluss (10) voneinander gesondert ausgebildet sind,
- die beiden Anschlüsse (5, 6) parallel zueinander ausgerichtet sind und die Wasserbehandlungseinrichtung (4) im Wesentlichen normal oder im Wesentlichen parallel zu den beiden Anschlüssen (5, 6) ausrichtbar ist,
- die Zusatzleitung (11) quer zu dem ersten Anschluss (5) und/oder dem zweiten Anschluss (6) und/oder zwischen dem ersten Anschluss (5) und dem zweiten Anschluss (6) anordenbar ist,
und/oder
- die zwei Fluidleitungsabschnitte (2, 3) in Form einer Hauptzuleitung (2a) und einer Hauptableitung (3a) ausgebildet sind.

3. Anschlussstück (1) nach Anspruch 1 oder 2, wobei der Mehrfachanschluss (10) einen, vorzugsweise planaren, Anschlussbereich (13) aufweist, wobei der Anschlussbereich (13) drei Öffnungen (14) umfasst, an welchen die zwei Fluidleitungsabschnitte (2, 3) und die Zusatzleitung (11) und/oder die drei Fluidleitungen (7, 8, 9) angeordnet oder anordenbar sind.

4. Anschlussstück (1) nach Anspruch 3, wobei die Zusatzleitung (11), die zwei Fluidleitungsabschnitte (2, 3) und/oder die drei Fluidleitungen (7, 8, 9) über gedachte konzentrische Kreise in die drei Öffnungen (14) des Anschlussbereiches (13) münden können, wobei die Zusatzleitung (11) und die zwei Fluidleitungsabschnitte (2, 3) kommunizierend, vorzugsweise fluchtend, in die drei Fluidleitungen (7, 8, 9) münden, und/oder die drei Öffnungen (14) im Wesentlichen konzentrisch angeordnet sind, wobei vorzugsweise vorgesehen ist, dass die drei Öffnungen (14) im Wesentlichen kreisringförmig oder kreisförmig ausgebildet sind.

5. Anschlussstück (1) nach Anspruch 3 oder 4, wobei wenigstens ein Dichtelement (16), vorzugsweise in Form eines Dichtringes, an dem Anschlussbereich (13) angeordnet ist.

6. Anschlussstück (1) nach einem der vorhergehenden Ansprüche, wobei
- der Mehrfachanschluss (10) als, vorzugsweise kreisförmiger, Flansch (17) ausgebildet ist,
- das Anschlussstück (1) im Wesentlichen T-förmig ausgebildet ist, und/oder
- die drei Fluidleitungen (7, 8, 9), die zwei Fluidleitungsabschnitte (2, 3) und/oder die Zusatzleitung (11) bereichsweise, vorzugsweise vollständig, Metalle (18), vorzugsweise Kupfer, Messing, Kupferlegierungen, Stahl, Blei und/oder Gusseisen, umfassen.

7. Anschlussstück (1) nach einem der vorhergehenden Ansprüche, wobei zumindest eine der drei Fluidleitungen (7, 8, 9), vorzugsweise die drei Fluidleitungen (7, 8, 9), von dem Anschlussstück (1) über die Wasserbehandlungseinrichtung (4) zurück in das Anschlussstück (1) führbar sind, wobei vorzugsweise vorgesehen ist, dass die zumindest eine der drei Fluidleitungen (7, 8, 9) vollständig innerhalb der Wasserbehandlungseinrichtung (4) angeordnet ist.

8. Anschlussstück (1) nach einem der vorhergehenden Ansprüche, wobei der Mehrfachanschluss (10) wenigstens eine Verschlussvorrichtung (19) umfasst, wobei vorzugsweise vorgesehen ist, dass
- die wenigstens eine Verschlussvorrichtung (19) wenigstens eine Schrägfläche zur fluiddichten Abdichtung der drei Fluidleitungen (7, 8, 9) mit den zwei Fluidleitungsabschnitten (2, 3) und der Zusatzleitung (11) umfasst, und/oder
- die wenigstens eine Verschlussvorrichtung (19) in Form eines Bajonettverschlusses (19a), eines Schraubverschlusses (19b), vorzugsweise mit wenigstens einem Gewindebolzen und wenigstens einer Mutter, eines Drehverschlusses (19c) und/oder eines Steckverschlusses (19d) vorliegt.

9. Anschlussstück (1) nach einem der vorhergehenden Ansprüche, wobei in dem Anschlussstück (1) und/oder in der Wasserbehandlungseinrichtung (4) wenigstens eine elektrisch oder mechanisch angetriebene Steuervorrichtung (21), vorzugsweise in Form eines Mehrfachventiles (21a) oder Überströmventils (21b), angeordnet /anordnenbar ist, mit welcher eine Verbindung (22) zumindest einer der drei Fluidleitungen (7, 8, 9)
- mit einem der zwei Fluidleitungsabschnitten (2, 3) zu einer davon unterschiedenen Fluidleitung (3, 2) oder Zusatzleitung (11) abänderbar ist, und/oder
- mit einer Zusatzleitung (11) zu einem der zwei Fluidleitungsabschnitten (2, 3) abänderbar ist, und/oder
- absperrbar ist.

10. Anschlussstück (1) nach einem der vorhergehenden Ansprüche, wobei in den drei Fluidleitungen (7, 8, 9), den zwei Fluidleitungsabschnitten (2, 3) und/oder der Zusatzleitung (11) wenigstens eine Messvorrichtung (23), vorzugsweise in Form einer Druckmessvorrichtung und/oder Durchflussmessvorrichtung, und/oder wenigstens eine Sicherungsvorrichtung (24), vorzugsweise in Form einer Überdrucksicherung, Temperatursicherung und/oder Konzentrationssicherung, angeordnet ist.

11. Wasserbehandlungseinrichtung (4) zur Verbindung an einen Mehrfachanschluss (10) eines Anschlussstücks (1) nach einem der vorhergehenden Ansprüche **dadurch gekennzeichnet, dass** die Wasserbehandlungseinrichtung (4) drei Fluidleitungen (7, 8, 9) und einen, vorzugsweise planaren, Anschlussbereich (13) umfasst, wobei der Anschlussbereich (13) drei Öffnungen (14) umfasst, an welchen die drei Fluidleitungen (7, 8, 9) anordenbar oder angeordnet sind, wobei vorzugsweise vorgesehen ist, dass die drei Fluidleitungen (7, 8, 9) ausgehend von dem Anschlussstück (1) zurück in das Anschlussstück (1) führen, wobei vorzugsweise vorgesehen ist, dass die drei Fluidleitungen (7, 8, 9) vollständig innerhalb der Wasserbehandlungseinrichtung (4) angeordnet sind.

12. Einrichtung umfassend ein Anschlussstück (1) nach einem der Ansprüche 1 bis 10, und eine Wasserbehandlungseinrichtung, insbesondere eine Wasserbehandlungseinrichtung nach Anspruch 11.

13. Verfahren zum Behandeln von einem Fluid (25), insbesondere Wasser, über zumindest ein Anschlussstück (1) nach einem der Ansprüche 1 bis 10, mit einer Wasserbehandlungseinrichtung (4) nach Anspruch 11, wobei
- in einem Normalbetrieb (27) das Fluid (25) von einem ersten Fluidleitungsabschnitt (2) über das Anschlussstück (1) in die Wasserbehandlungseinrichtung (4) in einen zweiten Fluidleitungsabschnitt (3) geleitet wird,
- in einem Spülbetrieb (28) und/oder einem Desinfektions- und/oder Regenerationsbetrieb (31) das über den ersten Fluidleitungsabschnitt (2) zugeführte Fluid (25), vorzugsweise vollständig, über eine Zusatzleitung (11) durch das Anschlussstück (1) geleitet wird.

14. Verfahren zum Behandeln von einem Fluid (25), insbesondere Wasser, über zumindest ein Anschlussstück (1) nach einem der Ansprüche 1 bis 10, mit einer Wasserbehandlungseinrichtung (4) nach Anspruch 11, wobei
- das Fluid (25) von einem ersten Fluidleitungsabschnitt (2) über das Anschlussstück (1) in die Wasserbehandlungseinrichtung (4) geleitet wird,
- in einem Zudosierbetrieb (30) wenigstens ein Zusatzstoff (26), insbesondere in Form von Phosphaten, Desinfektionsmittel, Mineralstoffen und/oder Regenerationsmittel, besonders bevorzugt in flüssiger Form, dem Fluid (25) über eine Zusatzleitung (11) zudosiert wird,
- das Fluid (25) mit dem wenigstens einen zudosierten Zusatzstoff (26) über das Anschlussstück (1) in den zweiten Fluidleitungsabschnitt (3) geleitet wird.

15. Verfahren nach Anspruch 13 oder 14, wobei
- wenigstens eine in dem Anschlussstück (1) und/oder der Wasserbehandlungseinrichtung (4) verortete Steuervorrichtung (21) das Fluid (25) derart durch eine geänderte Verbindung (22) von drei Fluidleitungen (7, 8, 9) mit den zwei Fluidleitungsabschnitten (2, 3) und/oder der Zusatzleitung (11) umgelenkt wird, dass das Fluid (25) Komponenten (32) der Wasserbehandlungseinrichtung (4) in einem Rückspülbetrieb in entgegengesetzter Richtung durchströmt, und/oder wenigstens eine in dem Anschlussstück (1) und/oder der Wasserbehandlungseinrichtung (4) verortete Steuervorrichtung (21) wenigstens eine von drei Fluidleitungen (7, 8, 9) absperrt.

## Claims

1. Coupling element (1) for connecting two fluid line sections (2, 3), in particular of a domestic water installation, to two fluid lines (7, 8) of at least one water treatment apparatus (4), comprising
- a first connector (5) for a first fluid line section (2),
- a second connector (6) for a second fluid line section (3),
- a multi-connector (10) for simultaneously connecting the two fluid lines (7, 8) of the water treatment apparatus (6), wherein the first connector (5) and the second connector (6) are arranged on opposite sides (12a, 12b) of the coupling element (1),
**characterized in that** the multi-connector (10) is formed such that when the two fluid lines (7, 8) are connected it can simultaneously also connect a third fluid line (9) of the water treatment apparatus (4) to an additive line (11) in the coupling element (1) in a fluid-tight manner.

2. Coupling element (1) according to claim 1, wherein
- the first fluid line (7), the second fluid line (8) and the third fluid line (9) are formed separate from each other,
- the first connector (5), the second connector (6) and the multi-connector (10) are formed separate from each other,
- the two connectors (5, 6) are aligned parallel to each other and the water treatment apparatus (4) can be aligned substantially normal or substantially parallel to the two connectors (5, 6),
- the additive line (11) can be arranged transverse to the first connector (5) and/or the second connector (6) and/or between the first connector (5) and the second connector (6),
and/or
- the two fluid line sections (2, 3) are formed as a main supply line (2a) and a main discharge line (3a).

3. Coupling element (1) according to claim 1 or 2, wherein the multi-connector (10) has a, preferably planar, connection region (13), wherein the connection region (13) comprises three openings (14), at which the two fluid line sections (2, 3) and the additive line (11) and/or the three fluid lines (7, 8, 9) are or can be arranged.

4. Coupling element (1) according to claim 3, wherein the additive line (11), the two fluid line sections (2, 3) and/or the three fluid lines (7, 8, 9) can lead, via imaginary concentric circles, to the three openings (14) of the connection region (13), wherein the additive line (11) and the two fluid line sections (2, 3) lead, in a communicating, preferably aligning, manner, to the three fluid lines (7, 8, 9), and/or the three openings (14) are arranged substantially concentric, wherein it is preferably provided that the three openings (14) are formed substantially annular or circular.

5. Coupling element (1) according to claim 3 or 4, wherein at least one sealing element (16), preferably in the form of a sealing ring, is arranged in the connection region (13) .

6. Coupling element (1) according to one of the preceding claims, wherein
- the multi-connector (10) is formed as a, preferably circular, flange (17),
- the coupling element (1) is formed substantially T-shaped, and/or
- the three fluid lines (7, 8, 9), the two fluid line sections (2, 3) and/or the additive line (11) in regions, preferably completely, comprise metals (18), preferably copper, brass, copper alloys, steel, lead and/or cast iron.

7. Coupling element (1) according to one of the preceding claims, wherein at least one of the three fluid lines (7, 8, 9), preferably the three fluid lines (7, 8, 9), can be guided from the coupling element (1) via the water treatment apparatus (4) back into the coupling element (1), wherein it is preferably provided that the at least one of the three fluid lines (7, 8, 9) is arranged completely within the water treatment apparatus (4).

8. Coupling element (1) according to one of the preceding claims, wherein the multi-connector (10) comprises at least one closing device (19), wherein it is preferably provided that
- the at least one closing device (19) comprises at least one sloping surface for the fluid-tight sealing of the three fluid lines (7, 8, 9) to the two fluid line sections (2, 3) and the additive line (11), and/or
- the at least one closing device (19) is present in the form of a bayonet closure (19a), a screw closure (19b), preferably with at least one threaded bolt and at least one nut, a twist closure (19c) and/or a plug-in closure (19d).

9. Coupling element (1) according to one of the preceding claims, wherein at least one electrically or mechanically driven control device (21), preferably in the form of a multi-valve (21a) or pressure relief valve (21b), with which a connection (22) of at least one of the three fluid lines (7, 8, 9)
- to one of the two fluid line sections (2, 3) can be changed to a different fluid line (3, 2) or additive line (11), and/or
- to an additive line (11) can be changed to one of the two fluid line sections (2, 3), and/or
- can be blocked,
is/can be arranged in the coupling element (1) and/or in the water treatment apparatus (4).

10. Coupling element (1) according to one of the preceding claims, wherein at least one measuring device (23), preferably in the form of a pressure measuring device and/or flow measuring device, and/or at least one safety device (24), preferably in the form of an overpressure protection, temperature protection and/or concentration protection, is arranged in the three fluid lines (7, 8, 9), the two fluid line sections (2, 3) and/or the additive line (11).

11. Water treatment apparatus (4) for connection at a multi-connector (10) of a coupling element (1) according to one of the preceding claims, **characterized in that** the water treatment apparatus (4) comprises three fluid lines (7, 8, 9) and a, preferably planar, connection region (13), wherein the connection region (13) comprises three openings (14), at which the three fluid lines (7, 8, 9) can be or are arranged, wherein it is preferably provided that the three fluid lines (7, 8, 9), starting from the coupling element (1), lead back into the coupling element (1), wherein it is preferably provided that the three fluid lines (7, 8, 9) are arranged completely within the water treatment apparatus (4).

12. Apparatus comprising a coupling element (1) according to one of claims 1 to 10, and a water treatment apparatus, in particular a water treatment apparatus according to claim 11.

13. Method for treating a fluid (25), in particular water, via at least one coupling element (1) according to one of claims 1 to 10, with a water treatment apparatus (4) according to claim 11, wherein
- in a normal operation (27) the fluid (25) is conducted from a first fluid line section (2) via the coupling element (1) into the water treatment apparatus (4) into a second fluid line section (3),
- in a flushing operation (28) and/or a disinfecting and/or regenerating operation (31) the fluid (25) fed in via the first fluid line section (2) is conducted, preferably completely, via an additive line (11) through the coupling element (1).

14. Method for treating a fluid (25), in particular water, via at least one coupling element (1) according to one of claims 1 to 10, with a water treatment apparatus (4) according to claim 11, wherein
- the fluid (25) is conducted from a first fluid line section (2) via the coupling element (1) into the water treatment apparatus (4),
- in a metered addition operation (30) at least one additive (26), in particular in the form of phosphates, disinfectants, minerals and/or regeneration agents, particularly preferably in liquid form, is added to the fluid (25) via an additive line (11),
- the fluid (25) with the at least one added additive (26) is conducted via the coupling element (1) into the second fluid line section (3).

15. Method according to claim 13 or 14, wherein
- at least one control device (21) located in the coupling element (1) and/or the water treatment apparatus (4) diverts the fluid (25) through an altered connection (22) of three fluid lines (7, 8, 9) to the two fluid line sections (2, 3) and/or the additive line (11) in such a way that the fluid (25) flows through components (32) of the water treatment apparatus (4) in the opposite direction in a backflushing operation, and/or at least one control device (21) located in the coupling element (1) and/or the water treatment apparatus (4) blocks at least one of three fluid lines (7, 8, 9).

## Revendications

1. Pièce de raccord (1) pour la liaison de deux sections de conduite de fluide (2, 3), en particulier une installation d'eau domestique, avec deux conduites de fluide (7, 8) au moins d'un dispositif de traitement d'eau (4), comprenant
- un premier raccord (5) pour une première section de conduite de fluide (2),
- un deuxième raccord (6) pour une deuxième section de conduite de fluide (3),
- un raccord multiple (10) pour le raccordement simultané des deux conduites de fluide (7, 8) du dispositif de traitement d'eau (6), dans lequel le premier raccord (5) et le deuxième raccord (6) sont agencés au niveau de côtés opposés (12a, 12b) de la pièce de raccord (1),
**caractérisée en ce que** le raccord multiple (10) est réalisé de telle manière qu'il puisse relier de manière étanche au fluide lors du raccordement de deux conduites de fluide (7, 8) simultanément aussi une troisième conduite de fluide (9) du dispositif de traitement d'eau (4) à une conduite supplémentaire (11) dans la pièce de raccord (1).

2. Pièce de raccord (1) selon la revendication 1, dans laquelle
- la première conduite de fluide, la deuxième conduite de fluide (8) et la troisième conduite de fluide (9) sont réalisées séparément les unes des autres,
- le premier raccord (5), le deuxième raccord (6) et le raccord multiple (10) sont réalisés séparément les uns des autres,
- les deux raccords (5, 6) sont orientés parallèlement l'un à l'autre et le dispositif de traitement d'eau (4) peut être orienté sensiblement normalement ou sensiblement parallèlement aux deux raccords (5, 6),
- la conduite supplémentaire (11) peut être agencée transversalement au premier raccord (5) et/ou au deuxième raccord (6) et/ou entre le premier raccord (5) et le deuxième raccord (6), et/ou
- les deux sections de conduite de fluide (2 3) sont réalisées sous la forme d'une conduite d'alimentation principale (2a) et d'une conduite d'évacuation principale (3a).

3. Pièce de raccord (1) selon la revendication 1 ou 2, dans lequel le raccord multiple (10) présente une zone de raccordement (13) de préférence planaire, dans laquelle la zone de raccordement (13) comporte trois ouvertures (14), au niveau desquelles les deux sections de conduite de fluide (2, 3) et la conduite supplémentaire (11) et/ou les trois conduites de fluide (7, 8, 9) sont ou peuvent être agencées.

4. Pièce de raccord (1) selon la revendication 3, dans laquelle la conduite supplémentaire (11), les deux sections de conduite de fluide (2,3) et/ou les trois conduites de fluide (7, 8, 9) peuvent déboucher par le biais de cercles concentriques imaginaires dans les trois ouvertures (14) de la zone de raccordement (13), dans laquelle la conduite supplémentaire (11) et les deux sections de conduites de fluide (2, 3) débouchent de manière communicante, de préférence en alignement, dans les trois conduites de fluide (7, 8, 9), et/ou les trois ouvertures (14) sont agencées sensiblement concentriquement, dans laquelle il est de préférence prévu que les trois ouvertures (14) soient réalisées sensiblement en anneau circulaire ou cercle.

5. Pièce de raccord (1) selon la revendication 3 ou 4, dans lequel au moins un élément étanche (16), de préférence sous la forme d'un anneau étanche, est agencé au niveau de la zone de raccordement (13).

6. Pièce de raccord (1) selon l'une des revendications précédentes, dans laquelle
- le raccord multiple (10) est réalisé comme bride (17), de préférence circulaire,
- la pièce de raccord (1) est réalisée sensiblement en forme de T, et/ou
- les trois conduites de fluide (7, 8, 9), les deux sections de conduite de fluide (2, 3) et/ou la conduite supplémentaire (11) comportent par endroits, de préférence complètement, des métaux (18), de préférence du cuivre, du laiton, des alliages de cuivre, de l'acier, du plomb et/ou de la fonte.

7. Pièce de raccord (1) selon l'une des revendications précédentes, dans laquelle au moins une des trois conduites de fluide (7, 8, 9), de préférence les trois conduites de fluide (7, 8, 9), peuvent être guidées de la pièce de raccord (1) par le biais du dispositif de traitement d'eau (4) à nouveau dans la pièce de raccord (1),
dans laquelle il est de préférence prévu que la au moins une des trois conduites de fluide (7, 8, 9) soit agencée complètement à l'intérieur du dispositif de traitement d'eau (4).

8. Pièce de raccord (1) selon l'une des revendications précédentes, dans laquelle le raccord multiple (10) comporte au moins un dispositif de fermeture (19), dans laquelle il est de préférence prévu que
- l'au moins un dispositif de fermeture (19) comporte au moins une surface oblique pour rendre étanche au fluide les trois conduites de fluide (7, 8, 9) avec les deux sections de conduite de fluide (2, 3) et la conduite supplémentaire (11), et/ou
- l'au moins un dispositif de fermeture (19) se présente sous la forme d'une fermeture à baïonnette (19a), d'une fermeture vissée (19b), de préférence avec au moins un boulon fileté et au moins un écrou, d'une fermeture rotative (19c) et/ou d'une fermeture enfichée (19d).

9. Pièce de raccord (1) selon l'une des revendications précédentes, dans laquelle dans la pièce de raccord (1) et/ou dans le dispositif de traitement d'eau (4), au moins un dispositif de commande (21) entraîné par voie électrique ou mécanique, est ou peut être agencé de préférence sous la forme d'une soupape multiple (21a) ou soupape de décharge (21b), avec laquelle une liaison (22) au moins d'une des trois conduites de fluide (7, 8, 9)
- avec une des deux sections de conduites de fluide (2, 3) peut être modifiée en une conduite de fluide (3, 2) différente de celles-ci ou conduite supplémentaire (11), et/ou
- avec une conduite supplémentaire (11) peut être modifiée en une des deux sections de conduite de fluide (2, 3), et/ou
- peut être bloquée.

10. Pièce de raccord (1) selon l'une des revendications précédentes, dans laquelle au moins un dispositif de mesure (23), de préférence sous la forme d'un dispositif de mesure de pression et/ou dispositif de mesure de débit, et/ou au moins un dispositif de protection (24), de préférence sous la forme d'une protection de surpression, protection de température et/ou protection de concentration est agencé dans les trois conduites de fluide (7, 8, 9), les deux sections de conduite de fluide (2, 3) et/ou la conduite supplémentaire (11).

11. Dispositif de traitement d'eau (4) pour la liaison au niveau d'un raccord multiple (10) d'une pièce de raccord (1) selon l'une des revendications précédentes, **caractérisé en ce que** le dispositif de traitement d'eau (4) comporte trois conduites de fluide (7, 8, 9) et une zone de raccord (13), de préférence planaire, dans lequel la zone de raccord (13) comporte trois ouvertures (14), au niveau desquelles les trois conduites de fluide (7, 8, 9) sont ou peuvent être agencées, dans lequel il est de préférence prévu que les trois conduites de fluide (7, 8, 9) mènent à partir de la pièce de raccord (1) à nouveau dans la pièce de raccord (1), dans laquelle il est de préférence prévu que les trois conduites de fluide (7, 8, 9) soient agencées complètement à l'intérieur du dispositif de traitement d'eau (4).

12. Dispositif comprenant une pièce de raccord (1) selon l'une des revendications 1 à 10, et un dispositif de traitement d'eau, en particulier un dispositif de traitement d'eau selon la revendication 11.

13. Procédé de traitement d'un fluide (25), en particulier de l'eau, par le biais d'au moins une pièce de raccord (1) selon l'une des revendications 1 à 10, avec un dispositif de traitement d'eau (4) selon la revendication 11, dans lequel
- dans un mode normal (27), le fluide (25) est conduit d'une première section de conduite de fluide (2) par le biais de la pièce de raccord (1) dans le dispositif de traitement d'eau (4) dans une deuxième section de conduite de fluide (3),
- dans un mode de rinçage (28) et/ou un mode de désinfection et/ou de régénération (31), le fluide (25) acheminé par le biais de la première section de conduite de fluide (2), est conduit, de préférence complètement, par le biais d'une conduite supplémentaire (11) par la pièce de raccord (1).

14. Procédé de traitement d'un fluide (25), en particulier de l'eau, par le biais d'au moins une pièce de raccord (1) selon l'une des revendications 1 à 10, avec un dispositif de traitement d'eau (4) selon la revendication 11, dans lequel
- le fluide (25) est conduit d'une première section de conduite de fluide (2) par le biais de la pièce de raccord (1) dans le dispositif de traitement d'eau (4),
- dans un mode d'ajout dosé (30), au moins une substance supplémentaire (26), en particulier sous la forme de phosphates, moyens de désinfection, substances minérales et/ou moyens de régénération, est ajoutée en étant dosée de manière particulièrement préférée sous la forme liquide au fluide (25) par le biais d'une conduite supplémentaire (11),
- le fluide (25) est conduit avec l'au moins une substance supplémentaire (26) ajoutée en étant dosée par le biais de la pièce de raccord (1) dans la deuxième section de conduite de fluide (3).

15. Procédé selon la revendication 13 ou 14, dans lequel
- au moins un dispositif de commande (21) implanté dans la pièce de raccord (1) et/ou le dispositif de traitement d'eau (4) est dévié le fluide (25) par une liaison (22) modifiée de trois conduites de fluide (7, 8, 9) avec les deux sections de conduite de fluide (2, 3) et/ou la conduite supplémentaire (11) de telle manière que le fluide (25) traverse des composants (32) du dispositif de traitement d'eau (4) dans un mode de lavage à contre-courant dans le sens opposé, et/ou au moins un dispositif de commande (21) implanté dans la pièce de raccord (1) et/ou le dispositif de traitement d'eau (4) bloque au moins une des trois conduites de fluide (7, 8, 9).
